(19) Europäisches Patentamt
European Patent Office
Office européen des brevets

(11) **EP 2 863 528 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(51) Int Cl.:
*H02M 3/155* *(2006.01)*        *H02M 3/158* *(2006.01)*
*H02M 7/797* *(2006.01)*

(21) Anmeldenummer: **13188827.3**

(22) Anmeldetag: **16.10.2013**

(54) **Einsatz eines Wechselrichters als Gleichstrom-Wander**

Operation of an inverter as a DC/DC-converter

Utilisation d'un onduleur comme un convertisseur CC/CC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.04.2015 Patentblatt 2015/17**

(73) Patentinhaber: **Siemens Aktiengesellschaft 80333 München (DE)**

(72) Erfinder:
• **Benesch, Norbert**
  **90562 Heroldsberg (DE)**
• **Buchstaller, Dominic**
  **91056 Dechsendorf (DE)**
• **Reinschke, Johannes**
  **90425 Nürnberg (DE)**
• **Sinner, Harald**
  **90542 Eckental/Herpersdorf (DE)**

(56) Entgegenhaltungen:
**DE-A1-102010 041 253     DE-A1-102011 075 927**

EP 2 863 528 B1

**Beschreibung**

Die vorliegende Erfindung betrifft einen Wechselrichter mit einem ersten Kondensator mit einer ersten Gleichspannung, wenigstens zwei jeweils zwei in Serie geschaltete Halbleiterschalter und jeweils einen Mittelanschluss aufweisenden Halbbrückenmodulen sowie einem Taktgeber zum Bereitstellen von Steuersignalen zum Betreiben der Halbleiterschalter der Halbbrückenmodule in einem Schaltbetrieb, wobei die Halbbrückenmodule am ersten Kondensator angeschlossen und dadurch parallelgeschaltet sind. Die Erfindung betrifft ferner ein Verfahren zum Betreiben eines Wechselrichters, wobei wenigstens zwei jeweils zwei in Serie geschaltete Halbleiterschalter und jeweils einen Mittelanschluss aufweisende Halbbrückenmodule des Wechselrichter mittels eines Taktgebers in Schaltbetrieb betrieben werden, wobei die Halbbrückenmodule in Parallelschaltung an einem ersten Kondensator des Wechselrichters betrieben werden, wobei am ersten Kondensator eine erste Gleichspannung anliegt. Darüber hinaus betrifft die Erfindung ein Verfahren zur Herstellung eines getakteten elektronischen Energiewandlers zum Wandeln einer ersten elektrischen Gleichspannung in eine zweite elektrische Gleichspannung. Weiterhin betrifft die Erfindung ein Rechnerprogrammprodukt umfassend ein Programm für eine Rechnereinheit eines Taktgebers eines Wechselrichters. Schließlich betrifft die Erfindung ein Rechnerprogrammprodukt umfassend ein Programm geeignet für eine Herstellung eines getakteten elektronischen Energiewandlers zum Wandeln einer ersten elektrischen Gleichspannung in eine zweite elektrische Gleichspannung.

Wechselrichter der gattungsgemäßen Art sowie Verfahren zu deren Betrieb und deren Herstellung sind dem Grunde nach bekannt, so dass es eines gesonderten druckschriftlichen Nachweises hierfür nicht bedarf. Wechselrichter sind eine Form eines Energiewandlers, mittels dem elektrische Energie einer Gleichspannung in elektrische Energie einer Wechselspannung, insbesondere einer einphasigen oder auch einer dreiphasigen Wechselspannung, gewandelt werden kann. Heutzutage werden Wechselrichter in Form sogenannter statischer Energiewandler eingesetzt, das heißt, dass sie anders als dynamische Energiewandler keine mechanisch bewegbaren, insbesondere rotierbaren Teile für den Zweck der Energiewandlung aufweisen. Wechselrichter der gattungsgemäßen Art als statische Energiewandler sind in der Regel als getaktete elektronische Energiewandler ausgebildet, und weisen zu diesem Zweck wenigstens ein Halbbrückenmodul auf, mittels welchem eine mittels eines Zwischenkreises bereitgestellte elektrische Gleichspannung in eine elektrische Wechselspannung umgewandelt werden kann. Zu diesem Zweck weist das Halbbrückenmodul zwei in Serie geschaltete Halbleiterschalter auf, die mittels eines Taktgebers im Taktbetrieb betrieben werden, so dass in gewünschter Weise die Wechselspannung an einem Mittelanschluss des Halbbrückenmoduls, der durch einen elektrischen Verbindungspunkt der beiden Halbleiterschalter des Halbbrückenmoduls gebildet ist, bereitgestellt wird. Eine solche Schaltungstopologie wird auch Halbbrückenschaltung genannt. Ein solcher Wechselrichter ist demnach für einen sogenannten einphasigen Betrieb ausgelegt.

Ein multifunktionaler Stromrichter von Gleichspannung zu Gleichspannung, von Gleichspannung zu Wechselspannung und von Wechselspannung zu Gleichspannung ist durch die DE 10 2011 075 927 A1 offenbart.

Eine leistungsstarke Variante eines solchen einphasigen Wechselrichters weist zwei parallel geschaltete Halbbrückenmodule auf, wodurch sich die Höhe der erzeugten Wechselspannung im Wesentlichen verdoppeln lässt. Zu diesem Zweck werden die Halbbrückenmodule entsprechend komplementär gesteuert. Eine solche Schaltungstopologie wird auch Vollbrückenschaltung genannt.

Darüber hinaus sind Wechselrichter, insbesondere für die Erzeugung eines dreiphasigen Wechselspannungsnetzes, im Einsatz, wobei für jede der Wechselspannungsphasen ein Halbbrückenmodul vorgesehen ist. Eine solche Schaltungstopologie wird ebenfalls Halbbrückenschaltung genannt. Darüber hinaus kann der Wechselrichter natürlich für jede Phase auch ein Paar von komplementär gesteuerten Halbbrückenmodulen aufweisen, um für jede Phase die Schaltungstopologie einer Vollbrückenschaltung bereitstellen zu können.

Wechselrichter der vorbeschriebenen Art sind in vielfältiger Weise und in großer Stückzahl im Einsatz. Insbesondere sind sie für einen mittleren Leistungsbereich von etwa 1 kW bis etwa 120 kW oder auch für eine hohe Leistung von größer als 120 kW im Einsatz.

Die zunehmende Verbreitung von regenerativen Energiequellen und Elektrofahrzeugen erhöht die Nachfrage nach Energiewandlern für Gleichspannung, sogenannte DC/DC-Wandler, insbesondere auch bei großen Leistungen. DC/DC-Wandler sind grundsätzlich 2-phasige Geräte und deshalb mit absehbarem Hardware-Aufwand realisierbar. Aufgrund der hohen Stückzahlen, insbesondere im mittleren und hohen Leistungsbereich sind jedoch Wechselrichter relativ dazu kostengünstig und mit hoher Leistungsdichte, vorzugsweise in Form eines Motormoduls, verfügbar.

Es ist deshalb die Aufgabe der Erfindung einen Wechselrichter, sowie ein Verfahren zu dessen Betrieb und auch ein Verfahren zu dessen Herstellung anzugeben, welches es erlaubt, den Wechselrichter - abweichend von seiner ursprünglichen Funktion - auch als Energiewandler für Gleichspannung nutzen zu können.

Als Lösung schlägt die Erfindung Wechselrichter gemäß dem unabhängigen Anspruch 1 vor. Darüber hinaus wird ein Verfahren zum Betreiben eines Wechselrichters gemäß dem weiteren unabhängigen Anspruch 7 vorgeschlagen. Weiterhin schlägt die Erfindung ein Verfahren zur Herstellung eines getakteten elektronischen Energiewandlers zum Wandeln von elektrischer Energie an einer ersten elektrischen Gleichspannung in elektrische Energie einer zweiten elektrischen Gleichspannung gemäß dem unabhängigen Anspruch 14 vor. Schließlich schlägt die Erfindung noch ein Rechnerprogrammprodukt gemäß dem unabhängigen Anspruch 18 und gemäß dem weiteren unabhängigen Anspruch 19 vor. Weitere vorteilhafte Ausgestaltungen und Merkmale ergeben sich aus den abhängigen Ansprüchen.

Wechselrichterseitig wird bei einem gattungsgemäßen Wechselrichter insbesondere vorgeschlagen, dass an den Mittelanschlüssen der Halbbrückenmodule ein Filtermodul zum Bereitstellen einer zweiten Gleichspannung angeschlossen ist und der Taktgeber dazu eingerichtet ist, die Steuersignale derart zu erzeugen, dass die erste elektrischen Gleichspannung am ersten Kondensator in die zweite elektrische Gleichspannung gewandelt wird. Entsprechend ist verfahrensseitig insbesondere vorgesehen, dass der Taktgeber Steuersignale derart erzeugt, dass mittels eines an die Mittelanschlüsse der Halbbrückenmodule angeschlossenen Filtermoduls eine zweite Gleichspannung bereitgestellt wird, so dass die erste elektrische Gleichspannung am ersten Kondensator in die zweite elektrische Gleichspannung gewandelt wird.

Mit diesen Maßnahmen wird erreicht, dass der Wechselrichter - abweichend von seiner ursprünglichen Bestimmung - nunmehr als DC/DC-Wandler betrieben werden kann. Die Erfindung erlaubt es somit, die kostengünstig im gesamten Leistungsbereich herstellbaren Wechselrichter auch für einen Betrieb als getakteter elektronischer Energiewandler zum Wandeln von einer ersten elektrischen Gleichspannung in eine zweite elektrische Gleichspannung nutzen zu können. Das Filtermodul ist entsprechend eingerichtet, um aus den an den Mittelanschlüssen bereitgestellten Spannungsverläufen in gewünschter Weise die zweite elektrische Gleichspannung bereitstellen zu können. Zu diesem Zweck werden die Spannungsverläufe der unterschiedlichen Mittelanschlüsse vorzugsweise entsprechend überlagert. Durch die Erfindung ist es möglich, einen bereits als abgeschlossene und/oder geprüfte Baueinheit vorhandenen Wechselrichter mechanisch im Wesentlichen unverändert für einen DC/DC-Wandler zu nutzen, indem an seine vorhandenen Mittelanschlüsse das Filtermodul angeschlossen und ansonsten lediglich die Steuersignale für die Halbleiterschalter der Halbbrückenmodule angepasst werden. Ein Eingriff in die Hardware des Wechselrichters kann dadurch im Wesentlichen vermieden werden. Der hierdurch gebildete DC/DC-Wandler umfasst bezüglich der Hardware somit neben dem Wechselrichter selbst lediglich das an seine Mittelanschlüsse angeschlossene Filtermodul. Die weitere Anpassung bezüglich der Steuersignale für die Halbleiterschalter der Halbbrückenmodule kann als einfach durchzuführende Softwareadaption realisiert sein.

Gemäß einem weiteren Aspekt der Erfindung stellt das Filtermodul für jeden der Mittelanschlüsse jeweils eine im Wesentlichen magnetisch autarke Induktivität bereit, die mit einem ihrer Anschlüsse an den jeweiligen Mittelanschluss angeschlossen ist. Magnetisch autark meint, dass zwischen den Induktivitäten im Wesentlichen keine magnetische Kopplung aufgrund des durch die jeweilige Induktivität erzeugten Magnetfeldes während des bestimmungsgemäßen Betriebs vorliegt. Zu diesem Zweck können die Induktivitäten beispielsweise gegeneinander magnetisch abgeschirmt sein. Eine induktive Wechselwirkung zwischen den Induktivitäten des Filtermoduls ist somit im Wesentlichen vermieden. Dadurch können insbesondere unerwünschte Rückwirkungen zwischen den Mittelanschlüssen aufgrund magnetischer Kopplung weitgehend vermieden werden.

Die Erfindung ist natürlich nicht nur bei Schaltungstopologien für Wechselrichter anwendbar, die auf der bekannten Zwei-Stufen-Technologie (2-level-inverter) beruhen, sondern gleichermaßen auch bei Wechselrichtern, deren Schaltungstopologie auf einer Drei-Stufen-Technologie (3-level-inverter, S3L-Inverter) oder Multi-Stufen-Technologie (multiple-level-inverter) beruhen. Bei Wechselrichtern höherer Leistung, beispielsweise ab etwa 10 kW, kann die 3-Stufen-Ausführung eingesetzt werden. Bei solchen Wechselrichtern ist neben den zwei bekannten, durch den ersten Kreiskondensator bestimmten elektrischen Potentialen am Mittelanschluss wenigstens ein weiteres drittes elektrisches Potential bereitstellbar, welches vorzugsweise zwischen den beiden bekannten elektrischen Potentialen liegt. Hierdurch können Vorteile im bestimmungsgemäßen Betrieb erreicht werden, beispielsweise geringere Schaltverluste, höhere Taktrate und/oder dergleichen. Diese Ausgestaltung kann natürlich auch mit einer Halbbrücken- oder Vollbrückentopologie kombiniert sein.

Vorzugsweise sind die Induktivitäten im Wesentlichen nicht miteinander magnetisch gekoppelt, so dass ein im Wesentlichen unabhängiger Betrieb der jeweils hierdurch gebildeten, parallelgeschalteten Wandlerstufen, das heißt, Halbbrückenmodul mit daran angeschlossener Induktivität, erreicht werden kann. Eine Besonderheit der Erfindung liegt darin, dass sämtliche Halbbrückenmodule des Wechselrichters während des Betriebs als Gleichspannungsenergiewandler aktiv sind und somit eine hohe Leistungsdichte beim Energiewandeln erreicht werden kann.

Damit verbessert die Erfindung auch einen Betrieb eines Wechselrichters als DC/DC-Wandler beim Laden und/oder Entladen von Ultracaps beim Absenken und Anheben von Lasten durch elektrisch angetriebene Kräne. Bei einer solchen Ausgestaltung würde sonst lediglich eine von mehreren Halbbrückenmodulen des Wechselrichters zum Zwecke des Energiewandelns genutzt.

Auch bei einer weiteren Anwendung in Bezug auf die Ansteuerung von Tragspulen in einem Magnetlager bringt die Erfindung eine Verbesserung, da ansonsten zur Realisierung der Gleichspannungswandlung mit einem Wechselrichter der Gleichstrom durch eines der Halbbrückenmodule herausgeführt und durch ein zweites der Halbbrückenmodule zurückgeführt würde. Das dritte Halbbrückenmodul würde bei einem solchen Wechselrichter wiederum nicht genutzt.

Im vorgenannten ersten Fall wäre der Gleichstrom durch die maximale Stromtragfähigkeit des einzigen stromführenden Halbbrückenmoduls begrenzt und es würden erhöhte Verluste im Wechselrichter entstehen. Beide vorgenannten Realisierungen würden jedoch unbedingt eine Inbetriebnahme durch einen Experten erfordern.

Der Mittelanschluss eines Halbbrückenmoduls ist ein Anschluss, der mit dem elektrischen Verbindungspunkt der in Serie geschalteten Halbleiterschalter elektrisch leitend verbunden ist. Im gewöhnlichen Wechselrichterbetrieb wird an diesem Mittelanschluss üblicherweise die gewandelte Wechselspannung bereitgestellt.

In der Regel weist der Wechselrichter einen ersten Kondensator auf, an dem die Halbbrückenmodule jeweils angeschlossen sind. Die Halbbrückenmodule sind vorzugsweise als eine Baueinheit ausgebildet, die lediglich zwei Anschlüsse zum Anschluss an den ersten Kondensator, einen oder zwei Steueranschlüsse für die beiden Halbleiterschalter und den Mittelanschluss aufweisen. Natürlich können die Halbbrückenmodule auch diskret durch Einzelbauteile gebildet sein. Auf diese Weise sind die Halbbrückenmodule nicht nur am ersten Kondensator angeschlossen, sondern darüber hinaus auch parallelgeschaltet. Wechselrichter, die der Erfindung zugrundeliegen, weisen somit vorzugsweise zwei, drei oder auch sechs Halbbrückenmodule auf.

Der erste Kondensator des Wechselrichters wird häufig auch als Zwischenkreiskondensator bezeichnet beziehungsweise übernimmt die Funktion eines Zwischenkreiskondensators, wenn der Wechselrichter in seinem bestimmungsgemäßen Wechselrichterbetrieb betrieben wird.

Auch wenn im Folgenden der Wechselrichter als getakteter elektronischer Energiewandler im Tiefsetzbetrieb beziehungsweise als Abwärtswandler beschrieben ist, kann der Wechselrichter jedoch auch in dualer Weise im Hochsetzbetrieb beziehungsweise als Aufwärtswandler betrieben werden. Darüber hinaus besteht die Möglichkeit, einen Energiefluss sowohl vom ersten Kondensator zum Filtermodul als auch umgekehrt zu erreichen. Beispielsweise kann im Falle eines Hochsetzbetriebs die Energieflussrichtung umgekehrt sein, also entgegen der Richtung beim Tiefsetzbetrieb, bei der der Energiefluss vom ersten Kondensator über die Mittelanschlüsse der Halbbrückenmodule und das Filtermodul erfolgt, wohingegen bei diesem Hochsetzbetrieb der Energiefluss umgekehrt ist. Ein Hochsetzbetrieb ist jedoch auch in die gleiche Energieflussrichtung wie beim zuvor genannten Tiefsetzbetrieb möglich. Gegebenenfalls können zu diesem Zweck geeignete Anpassungen am Filtermodul vorgesehen werden. Ebenso kann ein Tiefsetzbetrieb mit einer Energieflussrichtung vom Filtermodul zum ersten Kondensator vorgesehen sein. Grundsätzlich ist der erfindungsgemäße DC/DC-Wandler geeignet, sowohl ein Hochsetzstellen als auch ein Tiefsetzstellen mit beliebiger Energieflussrichtung zu ermöglichen.

Um den Tiefsetzbetrieb realisieren zu können, kann vorgesehen sein, dass lediglich jeweils ein einziger der beiden Halbleiterschalter der jeweiligen Halbbrückenmodule betrieben wird. Der jeweils andere Halbleiterschalter der Halbbrückenmodule kann während dieses Betriebs permanent ausgeschaltet bleiben, das heißt, er braucht während des Tiefsetzbetriebes nicht betätigt zu werden. Im Tiefsetzbetrieb brauchen deshalb lediglich die Halbleiterschalter der Halbbrückenmodule getaktet zu werden, die eine Energieentnahme aus dem ersten Kondensator zur Folge haben. Neben dieser einfachsten Art der Steuerung des Wechselrichters im DC/DC-Wandlerbetrieb, können alternative Steuerungen vorgesehen sein, wie im Folgenden noch näher erläutert werden wird.

Der Taktgeber kann durch eine elektronische Schaltung aber auch durch eine Rechnereinheit oder eine Kombination hiervon gebildet sein oder auch eine solche aufweisen. Vorzugsweise ist er Bestandteils des Wechselrichters und liefert für jedes Halbbrückenmodul, insbesondere für jeden Halbleiterschalter, ein Steuersignal. Diese Ausgestaltung ermöglicht den bestimmungsgemäßen Betrieb als Wechselrichter. Mit der Erfindung kann diese Schaltungstopologie genutzt werden, den Wechselrichter als DC/DC-Wandler zu nutzen, indem der Taktgeber dahingehend angepasst wird, dass er zum Tiefsetzstellen, oder alternativ auch zum Hochsetzstellen, geeignete Steuersignale für die Halbbrückenmodule, insbesondere deren Halbleiterschalter erzeugt. Entsprechend ist verfahrensseitig insbesondere vorgesehen, dass der Taktgeber Steuersignale derart erzeugt, dass mittels eines an die Mittelanschlüsse der Halbbrückenmodule angeschlossenen Filtermoduls eine zweite Gleichspannung bereitgestellt wird, so dass elektrische Energie der ersten elektrischen Gleichspannung am ersten Kondensator in elektrische Energie der zweiten elektrischen Gleichspannung gewandelt wird. Im einfachsten Fall der Steuerung der Halbbrückenmodule kann deshalb vorgesehen sein, dass im Betrieb des Wechselrichters als DC/DC-Wandler die Halbbrückenmodule lediglich jeweils hälftig genutzt werden, nämlich lediglich einer der durch sie bereitgestellten Halbleiterschalter. Im Übrigen sind die Halbbrückenmodule wie auch im Wechselrichterbetrieb parallelgeschaltet und zugleich betrieben, so dass alle Halbbrückenmodule des Wechselrichters im Wandlungsbetrieb aktiv sind.

Die Erfindung erlaubt es also, einen Wechselrichter als DC/DC-Wandler zu betreiben, insbesondere um ein Tiefsetzstellen erreichen zu können, aber auch um ein Hochsetzstellen erreichen zu können. Je nach vorgenannter Betriebsart wechselt die Richtung des Energieflusses. Bei einem Tiefsetzbetrieb erfolgt der Energiefluss vom ersten Kondensator zum zweiten Kondensator, wohingegen dies beim Hochsetzbetrieb umgekehrt ist. Dabei werden vorzugsweise sämtliche Halbbrückenmodule des Wechselrichters zum Zwecke der Energiewandlung genutzt. Bei einem dreiphasigen Wechselrichter werden demnach alle Halbbrücken sämtlicher Phasen zugleich für die DC/DC-Wandlung verwendet.

Halbleiterschalter im Sinne dieser Offenbarung sind vorzugsweise steuerbare elektronische Schaltelemente, beispielsweise ein Transistor, ein Thyristor, Kombinationsschaltungen hiervon, insbesondere mit parallelgeschalteten Freilaufdioden, beispielsweise ein Metaloxid Semiconductor Feldeffekttransistor (MOSFET), ein Isolated Gate Bipolar Transistor (IGBT), vorzugsweise mit einer integrierten Freilaufdiode, oder dergleichen.

Der Schaltbetrieb des Halbleiterschalters bedeutet, dass in einem eingeschalteten Zustand zwischen den die Schaltstrecke bildenden Anschlüssen des Halbleiterschalters ein sehr geringer elektrischer Widerstand bereitgestellt wird, so dass ein hoher Stromfluss bei sehr kleiner Restspannung möglich ist. Im ausgeschalteten Zustand ist die Schaltstrecke des Halbleiterschalters hochohmig, das heißt, sie stellt einen hohen elektrischen Widerstand bereit, so dass auch bei hoher, an der Schaltstrecke anliegender Spannung im Wesentlichen kein oder nur ein sehr geringer, insbesondere vernachlässigbarer Stromfluss vorliegt. Hiervon unterscheidet sich ein Linearbetrieb, der aber bei getakteten Energiewandlern nicht zum Einsatz kommt.

Entsprechend umfasst die Erfindung auch ein gattungsgemäßes Rechnerprogrammprodukt, wobei das Produkt Programmcodeabschnitte eines Programms zum Ausführen des erfindungsgemäßen Verfahrens zum Betreiben des Wechselrichters aufweist, wenn das Programm durch die Rechnereinheit des Taktgebers ausgeführt wird, so dass der Wechselrichter eine erste elektrische Gleichspannung in eine zweite elektrische Gleichspannung wandelt. Das vorgenannte Rechnerprogrammprodukt kann als rechnerlesbares Speichermedium ausgebildet sein. Darüber hinaus kann das Programm direkt in einen internen Speicher der Rechnereinheit ladbar sein. So ist es beispielsweise möglich, das Programm aus einem Netzwerk von einer Datenquelle, beispielsweise einem Server, herunterzuladen und in einen internen Speicher der Rechnereinheit zu laden, so dass der Rechner das Programm ausführen kann.

Darüber hinaus weist das Filtermodul eine Sternpunktinduktivität auf, die am Sternpunkt angeschlossen ist. Insbesondere ist vorgesehen, dass die Sternpunktinduktivität zwischen dem Sternpunkt und dem zweiten Kondensator angeschlossen ist. Dadurch kann die Filterfunktion des Filtermoduls weiter optimiert werden. Zudem erlaubt es diese Ausgestaltung, dass bei geeigneter Taktung sämtlicher Halbleiterschalter sämtlicher Halbbrückenmodule eine deutliche Reduzierung der Oberwellen erreicht werden kann. Die gewandelte zweite elektrische Gleichspannung ist somit qualitativ sehr hochwertig.

Vorzugsweise umfasst das Rechnerprogrammprodukt ein rechnerlesbares Medium, auf welchem die Programmcodeabschnitte gespeichert sind. Ein solches rechnerlesbares Medium kann beispielsweise ein Speicherbaustein, eine Compact Disc, ein USB-Stick, oder dergleichen sein.

Ein weiterer Aspekt der Erfindung sieht vor, dass die Induktivitäten mit den jeweils anderen Anschlüssen einen gemeinsamen Sternpunkt bildend elektrisch leitend zusammengeschaltet sind. Dies erlaubt es, mit den jeweiligen Halbbrücken nicht nur einzelne gewandelte zweite Gleichspannungen zu erzeugen, sondern diese zu einer gemeinsamen zweiten Gleichspannung zusammenzuführen. Dadurch kann eine Gleichspannung gebildet werden, die mit einer hohen elektrischen Leistung belastbar ist. Vorzugsweise sind dabei mittels des Taktgebers die Halbbrückenmodule, insbesondere die Halbleiterschalter derart gesteuert, dass die Belastung der Halbbrückenmodule im Wesentlichen gleichmäßig erfolgt. Der Sternpunkt kann dann zum Bereitstellen der zweiten Gleichspannung dienen.

Eine weitere Ausgestaltung der Erfindung sieht vor, dass der Sternpunkt an einem zweiten Kondensator zum Bereitstellen der zweiten elektrischen Gleichspannung angeschlossen ist. Vorzugsweise ist der zweite Kondensator durch das Filtermodul umfasst. Dadurch kann eine Glättung der Gleichspannung erreicht werden, so dass ein Oberwellenanteil der gewandelten zweiten elektrischen Gleichspannung reduziert werden kann. Bei Energiewandlung vom ersten Kondensator in den zweiten Kondensator arbeitet der Wechselrichter somit als getakteter elektronischer Energiewandler im Tiefsetzbetrieb, das heißt, die zweite elektrische Gleichspannung am zweiten Kondensator ist hinsichtlich ihres Wertes kleiner als die erste elektrische Gleichspannung am ersten Kondensator.

Darüber hinaus weist das Filtermodul gemäß einem weiteren Aspekt der Erfindung einen Anschluss zum Bereitstellen der zweiten Gleichspannung mit einer elektrischen Drossel auf. Der Einsatz der elektrischen Drossel im Bereich des Anschlusses zum Bereitstellen der zweiten Gleichspannung erlaubt es, die Glättung der zweiten Gleichspannung weiter zu verbessern.

Eine weitere Ausgestaltung der Erfindung sieht vor, dass in den Halbbrückenmodulen für jeden Halbleiterschalter eine Freilaufdiode vorgesehen ist, die zu diesem parallelgeschaltet ist. Durch die Freilaufdioden kann der gewünschte Wandlungseffekt weiter unterstützt werden, insbesondere wenn die Schaltstrecke des Halbleiterschalters eine Stromführung nur unidirektional, das heißt, in eine einzige Richtung erlaubt. Vorzugsweise sind die Freilaufdioden in die Halbleiterschalter integriert. Sie können aber auch durch separate Bauelemente gebildet sein, die jeweils zu jedem Halbleiterschalter parallelgeschaltet sind. Bei einem unidirektional betreibbaren Halbleiterschalter, das heißt, einem Halbleiterschalter, dessen Schaltstrecke Strom nur in eine einzige Richtung im eingeschalteten Zustand erlaubt, ist die Freilaufdiode folglich so an die Schaltstrecke des Halbleiterschalters parallelgeschaltet angeschlossen, dass sie den entgegengesetzten Stromfluss erlaubt. Hierdurch kann eine automatische Kommutierung erreicht werden.

Ein weiterer Aspekt der Erfindung sieht vor, dass der Wechselrichter ein Bezugspotential bereitstellt. Das Bezugspotential kann dazu dienen, die bestimmungsgemäße Funktion des Wechselrichters als DC/DC-Wandler zu gewährleisten. Vorzugsweise ist das Bezugspotential durch ein elektrisches Potential des ersten Kondensators gebildet. Beispielsweise kann das Bezugspotential durch jeweils einen Anschluss des ersten und des zweiten Kondensators und jeweils einen Anschluss der Halbbrückenmodule gebildet sein. Daneben kann das Bezugspotential aber auch durch ein elektrisches Potential gebildet sein, das elektrisch mittig zwischen den elektrischen Potentialen am ersten Kondensator ausgebildet ist. Es entspricht somit der halben elektrischen Spannung des ersten Kondensators. Auf diese Weise ist es möglich, mit dem Wechselrichter als DC/DC-Wandler sowohl eine positive zweite elektrische Gleichspannung als auch eine negative zweite elektrische Gleichspannung erzeugen zu können. Die zweite elektrische Gleichspannung ist vorzugsweise auf das Bezugspotential des Wechselrichters bezogen.

Gemäß einem weiteren Aspekt der Erfindung wird vorgeschlagen, dass die Halbbrückenmodule zeitgleich betrieben werden. Vorzugsweise werden die entsprechenden Halbleiterschalter zeitgleich getaktet, so dass durch die Halbbrückenmodule vorzugsweise im Wesentlichen der gleiche Strom fließt. Sämtliche Halbleiterschalter der Halbbrückenmodule werden in diesem Betriebsmodus synchron angesteuert. Hierdurch lässt sich eine besonders einfache Steuerung erreichen.

Ein weiterer Aspekt der Erfindung sieht vor, dass ausschließlich nur die Halbleiter der Halbbrückenmodule, die mit einem positiven elektrischen Potential des ersten Kondensator verbunden sind, im Schaltbetrieb betrieben werden und die jeweils anderen Halbleiterschalter der Halbbrückenmodule während dieses Betriebs ausgeschaltet bleiben. Hierdurch kann eine besonders einfache Steuerung des Wechselrichters für den Tiefsetzbetrieb erreicht werden.

Eine weitere Ausgestaltung der Erfindung sieht vor, dass die Halbleiterschalter jedes Halbbrückenmoduls wechselweise geschaltet werden. Bei dieser Ausgestaltung ist also vorgesehen, dass alternativ zu der voranstehend beschriebenen Ausgestaltung sämtliche Halbleiterschalter der Halbbrückenmodule zur DC/DC-Wandlung genutzt werden. Mit dieser Ausgestaltung ist es möglich, den Oberwellengehalt der zweiten Gleichspannung zu reduzieren, und dadurch Aufwand im Filtermodul einzusparen.

Eine weitere Ausgestaltung der Erfindung sieht vor, dass die Halbleiterschalter wenigstens eines Halbbrückenmoduls für eine vorgebbare Zeitdauer zugleich ausgeschaltet sind. Hierdurch kann erreicht werden, dass eine Unterdrückung von Oberwellen der zweiten elektrischen Gleichspannung weiter verbessert werden kann. Die Zeitdauer kann beispielsweise durch den Taktgeber vorgegeben sein. Es kann darüber hinaus auch vorgesehen sein, dass der Taktgeber mittels eines geeigneten Sensors Oberwellen der zweiten elektrischen Gleichspannung ermittelt und eine entsprechende Anpassung der Steuersignale vornimmt.

Ein weiterer Aspekt der Erfindung sieht vor, dass die Halbleiterschalter der Halbbrückenmodule zeitlich versetzt gesteuert werden. Dies betrifft insbesondere die Halbleiterschalter, die mit einem ihrer Anschlüsse gemeinsam an den ersten Kondensator angeschlossen sind. Ein zeitlicher Versatz der Steuersignale dieser Halbleiterschalter ermöglicht es, dass eine Glättung der zweiten elektrischen Gleichspannung weiter verbessert werden kann. Darüber hinaus kann eine Strombeanspruchung des ersten Kondensators reduziert werden, weil eine Stromentnahme aus dem ersten Kondensator durch die Halbbrückenmodule nicht zeitsynchron, sondern zeitversetzt erfolgt. Dies kann darüber hinaus Rückwirkungen auf eine Energiequelle reduzieren, die am ersten Kondensator angeschlossen ist und den Wechselrichter mit elektrischer Energie versorgt.

Eine weitere Ausgestaltung der Erfindung sieht vor, dass der Taktgeber die Steuersignale gemäß einem aus einer Tabelle vorabberechneter Pulsmuster ausgelesenen Pulsmuster erzeugt. Der Taktgeber kann dadurch sehr einfach gestaltet werden, weil er die jeweils individuell erforderlichen Pulsmuster für die Taktung der Halbbrückenmodule, insbesondere der Halbleiterschalter, nicht erst selber ermitteln muss, sondern entsprechend des gewählten Betriebszustands einfach aus einer abrufbaren Datenquelle aufruft. Diese Ausgestaltung erlaubt es darüber hinaus, dass für jeweilige Betriebszustände optimal angepasste Pulsmuster zur Verfügung gestellt werden können, deren Ermittlung ansonsten einen erheblichen Aufwand erfordern würde.

Mit der Erfindung wird ferner ein Verfahren zur Herstellung eines getakteten elektronischen Energiewandlers unter Nutzung eines Wechselrichters der gattungsgemäßen Art vorgeschlagen, wobei insbesondere ein an die Mittelanschlüsse anzuschließendes Filtermodul und eine Tabelle mit vorabberechneten Pulsmustern ermittelt wird. Dies erlaubt es, für einen vorgegebenen Wechselrichter und eine vorgegebene Energiewandlung eine optimale Anpassung und Steuerung des Wechselrichters für den DC/DC-Wandlungsbetrieb zu erreichen. So können durch Auswahl geeigneter Pulsmusters nicht nur Oberwellen reduziert, sondern auch der erforderliche Aufwand des Filtermoduls angepasst ausgewählt werden. Dadurch ist es möglich, bei Vorgabe eines maximal erlaubten Oberwellengehalts der zweiten elektrischen Gleichspannung den Aufwand zur Anpassung des Wechselrichters an den DC/DC-Wandlungsbetrieb zu reduzieren.

Insbesondere kann die Erweiterung eines Standard-Steuersatzes für Steuersignale für die Halbbrückenmodule beziehungsweise die Halbleiterschalter erweitert werden. Darüber hinaus erlaubt es diese Ausgestaltung, optimierte Pulsmuster für die Generierung der Steuersignale zu nutzen. Vorzugsweise erfolgt dies unter Nutzung einer Rechnereinrichtung, die die optimalen Pulsmuster ermittelt und insbesondere unter entsprechender Berücksichtigung von Nebenbedingungen eine Filter-Topo¬logie für das Filtermodul sowie eine Dimensionierung hierfür ermittelt.

Nebenbedingungen können beispielsweise sein, die Eignung eines neuen Schaltmusters sowie von Induktivitäten des Filtermoduls, Kostenaufwand, Grenzwert für Oberschwingungen der zweiten elektrischen Gleichspannung, Kombinationen hiervon und/oder dergleichen. Mittels der Rechnereinrichtung kann eine entsprechende Simulation durchgeführt werden, deren Ergebnis ein optimales Pulsmuster in Verbindung mit einem hierzu angepassten Filtermodul ist. Es ist also nicht erforderlich, in die Hardwarestruktur des Wechselrichters selbst einzugreifen. Vielmehr kann auf diese Weise der Wechselrichter als solcher hardwareseitig als DC/DC-Wandler betrieben werden, wobei lediglich der Taktgeber hinsichtlich der Erzeugung der Steuersignale entsprechend anzupassen ist. Der Taktgeber ist häufig als Rechnereinheit ausgebildet oder weist eine Rechnereinheit auf, so dass eine entsprechende Anpassung durch ein entsprechendes Softwareprogramm oder einen Programmabschnitt realisiert werden kann.

Dementsprechend wird mit der Erfindung ferner ein Rechnerprogrammprodukt umfassend ein Programm für eine Herstellung eines getakteten elektronischen Energiewandlers zum Wandeln einer ersten elektrischen Gleichspannung in eine zweite elektrische Gleichspannung, welcher getaktete elektronische Energiewandler einen Wechselrichter mit wenigstens zwei jeweils zwei in Serie geschaltete Halbleiterschalter und jeweils einen Mittelanschluss aufweisenden Halbbrückenmodulen sowie einem Taktgeber zum Bereitstellen von Steuersignalen zum Betreiben der Halbleiterschalter der Halbbrückenmodule in einem Schaltbetrieb verwendet, vorgeschlagen, wobei das Programm Programmcodeabschnitte eines Programms zum Ausführen der Schritte des erfindungsgemäßen Herstellungsverfahrens aufweist, wenn das Programm durch die Rechnereinrichtung ausgeführt wird, so dass, wenn ein Wechselrichter mit wenigstens zwei jeweils zwei in Serie geschaltete Halbleiterschalter und jeweils einen Mittelanschluss aufweisenden Halbbrückenmodulen sowie einem Taktgeber zum Bereitstellen von Steuersignalen zum Betreiben der Halbleiterschalter der Halbbrückenmodule in einem Schaltbetrieb verwendet wird, die Halbbrückenmodule in Parallelschaltung betrieben und die Steuersignale vom Taktgeber gemäß eines vorgegebenen Pulsmusters erzeugt werden und der Wechselrichter die erste elektrische Gleichspannung in die zweite elektrische Gleichspannung wandelt.

Gemäß einem weiteren Aspekt der Erfindung wird vorgeschlagen, dass das Filtermodul für jeden der Mittelanschlüsse jeweils eine im Wesentlichen magnetisch autarke, mit einem ihrer Anschlüsse an den jeweiligen Mittelanschluss angeschlossene Induktivität bereitstellt, welche Induktivitäten mit den jeweils anderen Anschlüssen einen gemeinsamen Sternpunkt bilden, wobei vorzugsweise mittels der Rechnereinrichtung gemäß einem Suchalgorithmus ein Pulsmuster ermittelt wird, mittels der Rechnereinrichtung eine Simulation des bestimmungsgemäßen Betriebs durchgeführt und ein Frequenzspektrum einer elektrischen Spannung am Sternpunkt ermittelt wird. Hierdurch kann für jedes Pulsmuster eine Qualitätsgröße ermittelt werden, die es erlaubt, das ermittelte Pulsmuster mit anderen bereits vorab ermittelten Pulsmustern zu vergleichen. Auf diese Weise lässt sich ein optimales Pulsmuster ermitteln. So kann mittels der Rechnereinrichtung iterativ für bestimmte Randbedingungen und Schaltungstopologien sowie Anwendungsbedingungen ein optimales Pulsmuster ermittelt werden.

Demzufolge sieht eine Weiterbildung der Erfindung vor, dass mittels der Rechnereinrichtung unter Berücksichtigung wenigstens einer Nebenbedingung ein optimales Pulsmuster ermittelt wird.

Darüber hinaus kann auch vorgesehen sein, dass eine Topologie für das Filtermodul ermittelt wird, mit der ein vorgegebener Wert für Oberschwingungen der zweiten Gleichspannung eingehalten wird. So kann vorgesehen sein, dass am Sternpunkt weitere elektronische passive Bauelemente, beispielsweise Kondensatoren, Induktivitäten oder dergleichen angeschlossen werden, mit denen eine weitere Verbesserung der Dämpfung von Oberschwingungen erreicht werden kann. Hierdurch kann das Einhalten der Nebenbedingungen, insbesondere in Bezug auf Oberschwingungen weiter verbessert werden.

Weitere Vorteile und Merkmale sind der folgenden Beschreibung von Ausführungsbeispielen anhand der Figuren zu entnehmen. In den Figuren sind gleiche Bauteile und Funktionen mit gleichen Bezugszeichen bezeichnet.

Es zeigen:

FIG 1 ein schematisches Prinzipschaltbild für einen bidirektionalen DC/DC-Wandler, der hier als synchroner getakteter elektronischer Energiewandler ausgebildet ist,

FIG 2 ein schematisches Prinzipschaltbild für einen Wechselrichter betrieben als DC/DC-Wandler in einem Tiefsetzbetrieb mit einem erfindungsgemäßen Filtermodul,

FIG 3 ein schematisches Prinzipschaltbild entsprechend FIG 2, wobei in dem Filtermodul die Werte eines zweiten Kondensators, einer Drossel und Sternpunktinduktivität jeweils Null sind,

FIG 4 schematisch ein Signal-Zeit-Diagramm für Steuersignale für die Halbleiterschalter der Halbbrückenmodule sowie für eine Ausgangsspannung des Filtermoduls gemäß FIG

FIG 5 ein Signal-Zeit-Diagramm in schematischer Darstellung wie FIG 4, jedoch mit einem größeren Tastverhältnis,

FIG 6 ein schematisches Signal-Zeit-Diagramm wie FIG 4, 5, jedoch mit einem kleineren Tastverhältnis,

FIG 7 ein schematisches Prinzipschaltbild wie FIG 3, wobei ein Bezugspotential des Wechselrichters auf der halben Spannung des ersten Kondensators liegt,

FIG 8 eine schematische Darstellung eines Signal-Zeit-Diagramms wie FIG 4, wobei die Ausgangsspannung sowohl positiv als auch negativ sein kann,

FIG 9 eine schematische Darstellung eines Signal-Zeit-Diagramms für Steuersignale für die Schaltung gemäß FIG 4, wobei für die Halbbrückenmodule unterschiedliche Tastverhältnisse vorgesehen sind,

FIG 10 eine schematische Darstellung eines Signal-Zeit-Diagramms wie FIG 9, wobei das Steuersignal für eines der Halbbrückenmodule eine Halbbrückenmodulausschaltzeit aufweist,

FIG 11 eine schematische Darstellung eines Signal-Zeit-Verlaufs wie FIG 4, wobei die Steuersignale für die Halbbrückenmodule phasenversetzt zueinander sind,

FIG 12 eine schematische Darstellung eines Signal-Zeit-Verlaufs für Steuersignale mit variablen Pulsmustern und Halbbrückenausschaltzeiten,

FIG 13 eine schematische Darstellung der Erweiterung eines Steuersignalsatzes für einen Wechselrichter gemäß der Erfindung und

FIG 14 eine schematische Darstellung der Berechnungsabfolge für ein Pulsmuster und ein Filtermodul für eine konkrete Anwendung zum Laden eines Akkumulators aus einer Energiequelle, die ein dreiphasiges Wechselspannungsnetz bereitstellt.

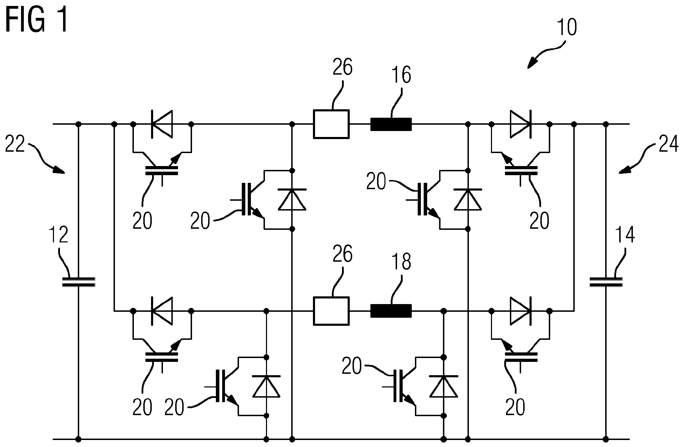

FIG 1 zeigt in einer schematischen Prinzipschaltdarstellung eine grundlegende Schaltungstopologie für einen bidirektionalen DC-DC-Wandler 10, der als synchroner DC-DC-Wandler ausgebildet ist, das heißt, der sowohl für einen Hochsetzbetrieb als auch für einen Tiefsetzbetrieb geeignet ist. Zu diesem Zweck weist der DC-DC-Wandler eine erste Anschlussseite 22 auf, die zwei nicht bezeichnete Anschlüsse umfasst, an denen ein erster Kondensator 12 angeschlossen ist. Ferner weist der DC-DC-Wandler 10 eine zweite Anschlussseite 24 auf, deren beide Anschlüsse an einen zweiten Kondensator 14 angeschlossen sind. Vorliegend ist der DC-DC-Wandler 10 ohne galvanische Trennung ausgebildet. Aus diesem Grund bilden jeweils einer der beiden Anschlüsse der Anschlussseiten 22, 24 ein gemeinsames Bezugspotential.

Zwischen den beiden Kondensatoren sind ferner zwei Wandlungszweige mit Induktivitäten 16, 18 angeordnet, die jeweils mittels zweier IGBT's 20 an die jeweils beiden Kondensatoren 12, 14 angeschlossen sind. Nicht dargestellt ist eine Steuereinheit, die die Transistoren 20 entsprechend des gewählten Betriebs ansteuern, um den gewünschten Wandlungseffekt erreichen zu können. Ferner sind in Serie zu den Induktivitäten 16, 18 Stromsensoren 26 geschaltet, mittels denen der jeweilige aktuelle Strom durch die jeweilige Induktivität 16, 18 erfasst werden kann. Dieser erfasste Stromwert wird an die Steuereinheit übermittelt und dient neben weiteren Parametern zur Erzeugung der geeigneten Steuersignale für die IGBT's 20.

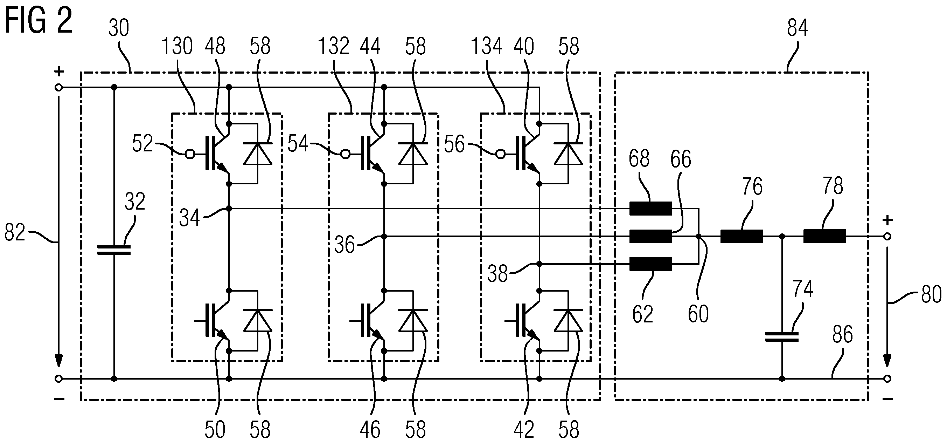

FIG 2 zeigt in schematischer Schaltbilddarstellung einen Wechselrichter 30, der für die Bereitstellung einer dreiphasigen Wechselspannung ausgelegt ist. Zu diesem Zweck weist der Wechselrichter 30 einen ersten Kondensator 32 auf, der als Zwischenkreiskondensator dient und an dem Halbbrückenmodule 130, 132, 134 mit jeweils seriell verschalteten IGBT's 40, 42, 44, 46, 48, 50 als Halbleiterschalter angeschlossen sind. Hierdurch sind Halbbrückenmodule 130, 132, 134 parallelgeschaltet. Jedes der Halbbrückenmodule 130, 132, 134 weist einen Mittelanschluss 34, 36, 38 auf, an denen beim gewöhnlichen Wechselrichterbetrieb drei um jeweils 120 Grad phasenverschobene Wechselspannungen bereitgestellt werden.

Aus FIG 2 ist ferner ersichtlich, dass der Wechselrichter 30 um ein an die Mittelanschlüsse 34, 36, 38 angeschlossenes Filtermodul 84 ergänzt ist, welches drei Induktivitäten 62, 66, 68 aufweist, die jeweils mit einem Anschluss an jeweils einen Mittelanschluss 34, 36, 38 des Wechselrichters 30 angeschlossen sind und mit ihren gegenüberliegenden anderen Anschlüssen zu einem gemeinsamen Sternpunkt 60 elektrisch leitend zusammengefasst sind.

Der Sternpunkt 60 ist über eine Sternpunktdrossel 76 an einen zweiten Kondensator 74 angeschlossen. Jeweils ein Anschluss der Kondensatoren 32, 74 sowie die Emitter der IGBT's 42, 46, 50 bilden ein gemeinsames Bezugspotential 86 des Wechselrichters 30.

Am ersten Kondensator 32 ist - nicht dargestellt - eine elek¬trische Energiequelle angeschlossen, die am ersten Kondensator 32 eine Eingangsspannung 82 in Form einer elektrischen Gleichspannung bewirkt.

Eine Ausgangsspannung 80 ist über den zweiten Kondensator 74 und über eine elektrische Drossel 78 des Filtermoduls 84 gegenüber dem Bezugspotential 86 bereitgestellt.

Ferner weist jeder der IGBT's 40, 42, 44, 46, 48, 50 eine Freilaufdiode 58 auf, die in den jeweiligen IGBT 40, 42, 44, 46, 48, 50 integriert ist.

Die Kombination aus dem Wechselrichter 30 und dem Filtermodul 84 dient vorliegend dazu, die Eingangsspannung 82 in eine Ausgangsspannung 80 zu wandeln, die kleiner ist als die Eingangsspannung 82. Entsprechend erfolgt in diesem Ausführungsbeispiel ein Energiefluss vom ersten Kondensator 32 zum zweiten Kondensator 74. In einem alternativen Ausführungsbeispiel kann auch ein entgegengesetzter Energiefluss vorgesehen sein.

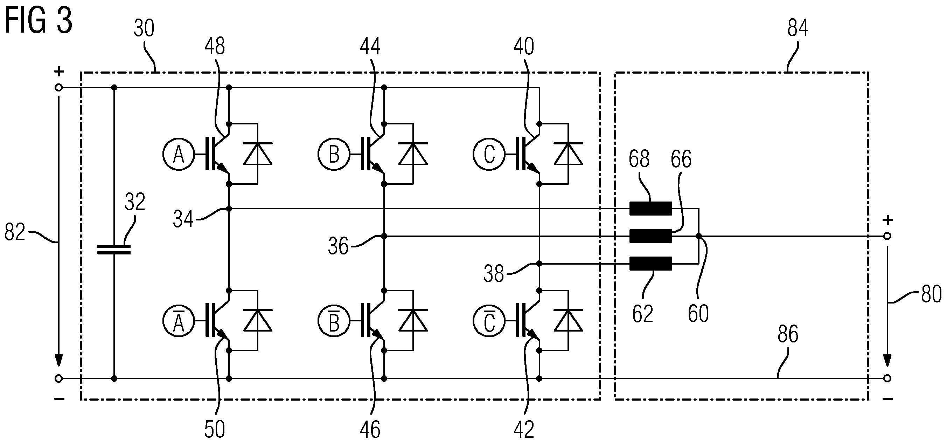

FIG 3 zeigt eine leicht abgewandelte schematische Prinzipschaltung gemäß der FIG 2, bei der die Induktivitätswerte der Sternpunktinduktivität 76 sowie der Drossel 78 als auch der Kapazitätswert des zweiten Kondensators 74 Null sind. Dadurch reduziert sich das Filtermodul 84 auf die zum Sternpunkt 60 zusammengeschalteten Induktivitäten 62, 66, 68. Darüber hinaus ist bei dem Wechselrichter 30 gemäß FIG 3 vorgesehen, dass die beiden jeweils zu einem Halbbrückenmodul 130, 132, 134 gehörenden IGBT's 40, 42, 44, 46, 48, 50 jeweils zugleich komplementär angesteuert werden, das heißt, dass beispielsweise der IGBT 48 mit einem entsprechenden Steuersignal aktiv eingeschaltet ist, und gleichzeitig der zugehörige komplementäre IGBT 50 aktiv mit einem entsprechenden Steuersignal ausgeschaltet ist. Vorzugsweise stellen die Halbbrückenmodule 130, 132, 134 entsprechende Steuerungslogik bereit, so dass lediglich ein einziges Steuersignal für das gesamte Halbbrückenmodul 130, 132, 134 erforderlich ist, welches seine IGBT's entsprechend steuert. Auch wenn dies nicht weiter erläutert wird, so ist darüber hinaus bei der komplementären Ansteuerung der beiden IGBT's eines Halbbrückenmoduls 130, 132, 134 eine Totzeit vorgesehen, die verhindert, dass sich unter den unterschiedlichsten Zuständen im realen Betrieb der IGBT's Überlappungseinschaltzeiträume ausbilden können. Da dies für den Gegenstand der Erfindung jedoch nicht relevant ist, wird für weitere Ausführungen diesbezüglich auf den Stand der Technik verwiesen. Die Erfindung geht davon aus, dass durch entsprechende schaltungstechnische oder auch softwaretechnische Maßnahmen sichergestellt ist, dass die Totzeit einen Kurzschlussstromfluss durch die Halbbrücke zuverlässig unterdrückt. Dabei ist die Totzeit derart klein, dass sie für das im Folgenden beschriebene Verfahren zum Betreiben des Wechselrichters im Wesentlichen nicht relevant ist. Aus diesem Grund sind in FIG 3 die Steuersignale für die IGBT's mit A, $\overline{A}$, B, $\overline{B}$, C, $\overline{C}$, bezeichnet. Diese Signale stehen an den Gate-Anschlüssen der jeweiligen IGBT's 40, 42, 44, 46, 48, 50 an. Dabei ist das Signal $\overline{A}$ das invertierte Signal A, das Signal $\overline{B}$ das invertierte Signal B und das Signal $\overline{C}$ das invertierte Signal C.

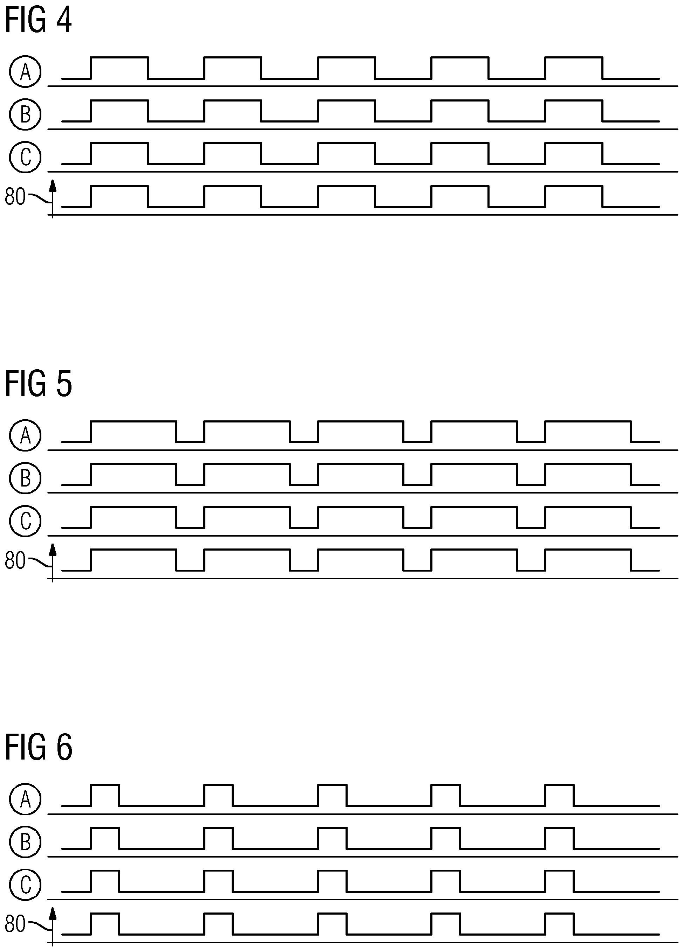

Die FIG 4 bis 6 zeigen entsprechende Signalverläufe der Steuersignale für die Halbbrückenmodule beziehungsweise die IGBT's 40, 42, 44, 46, 48, 50 in einem Signal-Zeit-Diagramm. Darüber hinaus enthalten diese Diagramme einen vierten Signalverlauf, nämlich den einer Ausgangsspannung 80 des Filtermoduls 84 gemäß FIG 3.

Alle drei FIG 4 bis 6 zeigen ein Rechtecksignal als Taktsignal für die Halbbrückenmodule 130, 132, 134 beziehungsweise IGBT's 40, 42, 44, 46, 48, 50. Ein Tastverhältnis der in den FIG 4 bis 6 dargestellten Signale ist für den dargestellten Bereich konstant. Entsprechend ergibt sich die Ausgangsspannung 80 gemäß der FIG 4 bis 6. Auch diese stellt vorliegend ein Rechtecksignal dar, das hinsichtlich Frequenz, Tastverhältnis und Phasenverschiebung den Steuersignalen A, B und C entspricht. Die Steuersignale A, B und C sind ebenfalls nicht phasenverschoben, weisen das gleiche Tastverhältnis auf und die gleiche Frequenz. Sie sind also synchron.

Werden für die Sternpunktinduktivität 76, die Drossel 78 und den zweiten Kondensator 74 Werte gewählt, die von Null verschieden sind, so wird hierdurch eine ergänzende Filterung erreicht, so dass sich als Ausgangsspannung 80 eine Gleichspannung, nämlich die zweite elektrische Gleichspannung ausbildet. Diese ist von den gewählten Parametern abhängig und kann vorzugsweise eingestellt werden. Darüber hinaus kann natürlich auch ein Regler vorgesehen sein, der möglichst unabhängig von einer Belastung der zweiten elektrischen Gleichspannung 80 durch einen Verbraucher einen möglichst konstanten Wert für die zweite elektrische Gleichspannung 80 einstellt.

Bei FIG 4 ist ein Tastverhältnis von etwa 0,5 vorgesehen, wohingegen bei der FIG 5 die Steuersignale A, B und C ein Tastverhältnis von etwa 0,75 aufweisen und bei der FIG 6 ein Tastverhältnis von etwa 0,25 vorgesehen ist. Entsprechend stellt sich die Ausgangsspannung 80 ein.

Aus FIG 3 ist ferner ersichtlich, dass die Emitter der IGBT's 42, 46, 50 ein Bezugspotential 86 des Wechselrichters 30 bilden. Entsprechend werden die Spannungswerte gegenüber diesem Bezugspotential 86 angegeben, so beispielsweise die Ausgangsspannung 80 oder auch eine Eingangsspannung 82, die ebenfalls am ersten Kondensator 32 anliegt.

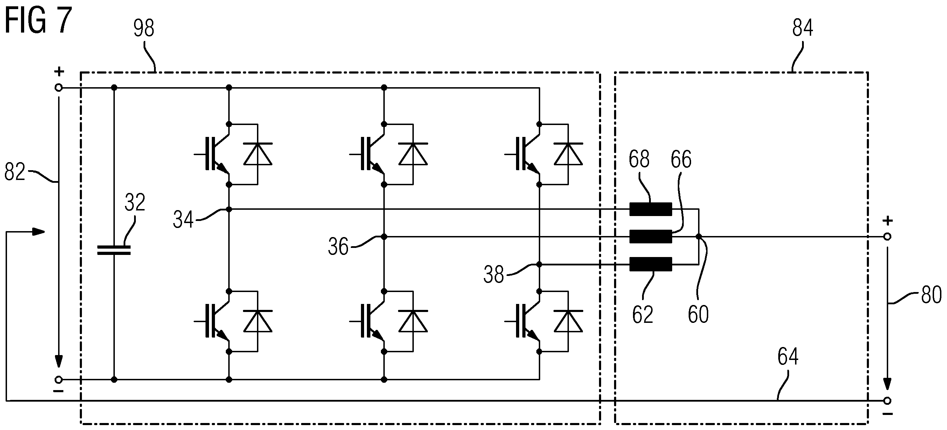

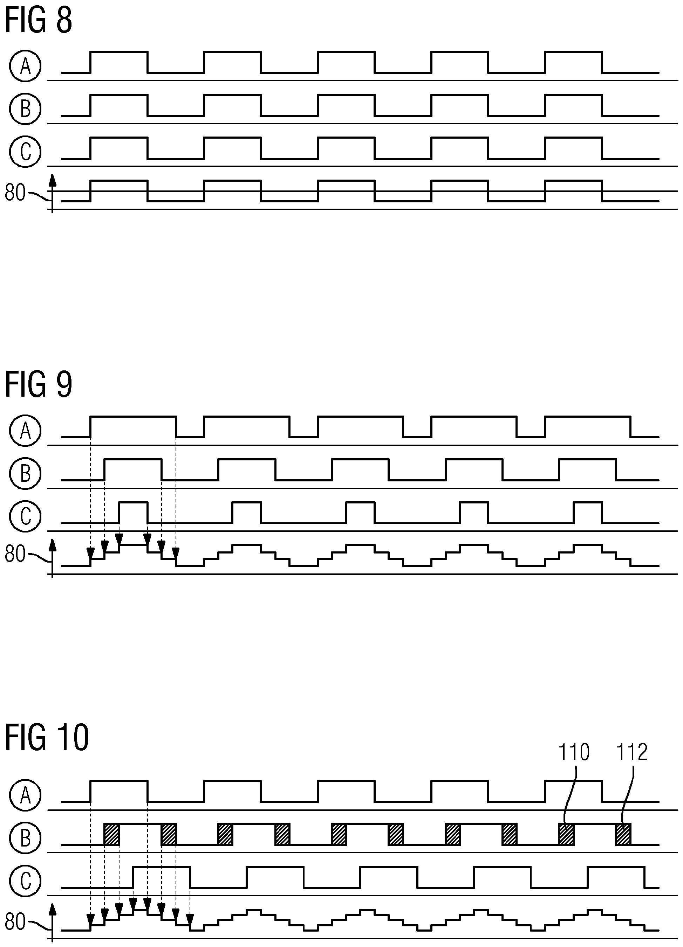

FIG 7 zeigt eine Abwandlung der Schaltung gemäß FIG 3, die sich auf das Bezugspotential bezieht. Bei der Schaltung gemäß FIG 7 ist das Bezugspotential durch ein Bezugspotential 64 gebildet, welches auf der halben Eingangsspannung 82 liegt, die auch am ersten Kondensator 32 ansteht. Durch diese Ausgestaltung ist es möglich, dass nicht nur positive zweite elektrische Gleichspannungen, sondern auch negative zweite elektrische Gleichspannungen als Ausgangsspannung 80 erzeugt werden können. Zugleich reduziert sich aber der Einstellbereich auf etwa den halben Wert der Eingangsspannung 82 sowohl für eine positive zweite elektrische Gleichspannung als auch für eine negative zweite elektrische Gleichspannung. Einen entsprechenden Signalverlauf für ein Tastverhältnis bei 0,5 ergibt sich gemäß FIG 8, dessen Signalverlauf auf den Signalen wie gemäß FIG 4 beruht.

FIG 9 zeigt nun eine weitere Ausgestaltung für Steuersignale A, B und C sowie eine sich hieraus ergebende Ausgangsspannung 80 bei einer Schaltungsanordnung gemäß FIG 3. Zu erkennen ist, dass die Steuersignale A, B und C unterschiedliche Tastverhältnisse aufweisen, und zwar hat das Steuersignal B ein Tastverhältnis von etwa 0,5, wohingegen das Steuersignal A ein Tastverhältnis größer als 0,5 aufweist, in der vorliegenden Ausgestaltung etwa 0,75. Dagegen weist das Steuersignal C ein Tastverhältnis von etwa 0,25 auf, das heißt, das Steuersignal c weist ein Tastverhältnis von kleiner als 0,5 auf. Entsprechend ergibt sich ein zugehöriger Spannungsverlauf der Ausgangsspannung 80, der vorliegend treppenförmig ausgebildet ist. Diese Ausgestaltung hat jedoch eine ungleichmäßige Belastung der drei Halbbrücken 130, 132 und 134 zur Folge. Dies ist bei dem bestimmungsgemäßen Betrieb als DC/DC-Wandler zu beachten.

Natürlich besteht die Möglichkeit, nach Ablauf bestimmter Zeiträume die Steuersignale A, B und C zyklisch hinsichtlich ihres Tastverhältnisses zu vertauschen. Dadurch kann eine gleichmäßigere thermische Belastung der Halbbrückenmodule 130, 132 und 134 erreicht werden. Der Vorteil einer solchen Ansteuerung ergibt sich dadurch, dass ein Aufwand im Filtermodul 84 reduziert werden kann, um die zweite elektrische Gleichspannung zu erzeugen.

FIG 10 zeigt eine weitere alternative Ausgestaltung für Steuersignale für die IGBT's 40, 42, 44, 46, 48, 50, bei der die Steuersignale A, B und C zwar das gleiche Tastverhältnis und die gleiche Frequenz im Wesentlichen aufweisen, jedoch hinsichtlich ihrer Phasenlage gegenüber einander verschoben sind. Darüber hinaus ist vorliegend für das Signal B sowohl im Bereich der ansteigenden Flanke des Rechtecksignals als auch im Bereich der absteigenden Flanke des Rechtecksignals jeweils ein Zeitbereich 110 beziehungsweise 112 vorgesehen, in dem beide IGBT's 44, 46 des Halbbrückenmoduls 132 ausgeschaltet sind. Hier ist demnach eine Halbbrückenausschaltzeit realisiert. Auch hier ergibt sich wieder eine ungleichmäßige Belastung der drei Halbbrückenmodule 130, 132, 134. Zu erkennen ist jedoch die besondere Auswirkung auf die Ausgangsspannung 80, bei der sich nun die Anzahl der Treppenstufen des dort dargestellten Signalverlaufs sowie auch der entsprechende Pegel verändert hat.

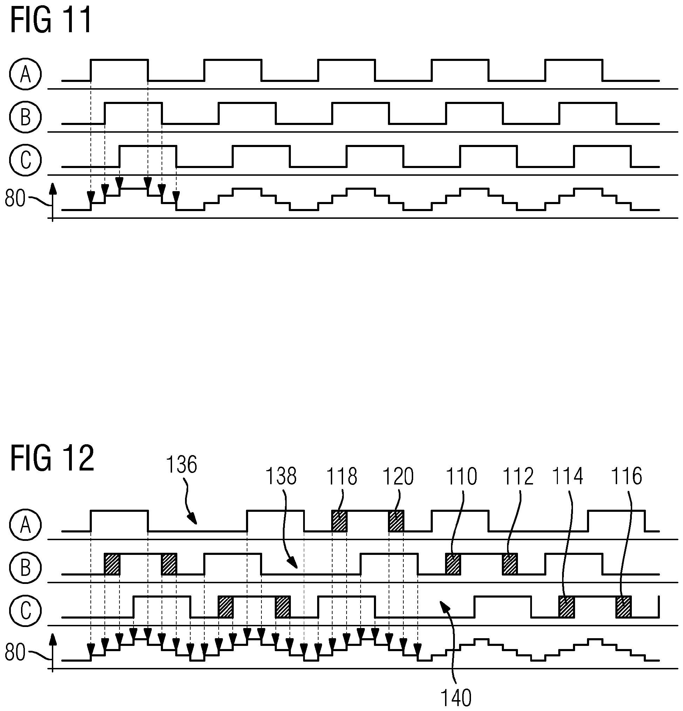

FIG 12 zeigt eine weitere Anwendung auf die Steuersignale A, B und C, wobei nunmehr auch beim Steuersignal A und beim Steuersignal C entsprechende Zeiträume 118, 120, 114, 116 vorgesehen sind, bei denen beide IGBT's 40, 42, 48, 50 der Halbbrückenmodule 130 und 134 ausgeschaltet sind. Dadurch kann auf die Ausgangsspannung 80 weiter Einfluss genommen werden. Aus FIG 12 ist ferner ersichtlich, dass die Steuersignale A, B und C in dieser Ausgestaltung größere Lücken 136, 138, 140 aufweisen. Hierdurch ergeben sich weitere Einflussmöglichkeiten auf die Ausgangsspannung 80, wie ebenfalls aus FIG 12 ersichtlich ist.

FIG 11 zeigt ein Signal-Zeit-Diagramm für Steuersignale A, B und C, basierend auf den Steuersignalen A, B und C gemäß FIG 4, wobei die Steuersignale A, B und C gemäß FIG 11 hinsichtlich ihrer Phase gegeneinander verschoben sind. Vorliegend ist eine Phasenverschiebung von etwa 60 Grad bezogen auf die Signalperiode vorgesehen. Dadurch ergibt sich der Signalverlauf für die Ausgangsspannung 80 gemäß FIG 11.

Insgesamt kann mit den vorbeschriebenen Pulsmustern für die Signalverläufe der Steuersignale A, B und C erreicht werden, dass Oberwellenschwingungen reduziert werden können, so dass ein Filteraufwand beim Filtermodul 84 reduziert werden kann. Auf diese Weise ist es möglich, neben einer hoch effizienten DC/DC-Wandlung ein sehr kompaktes Filtermodul 84 bereitzustellen und auf diese Weise kostengünstig und kompakt einen DC/DC-Wandler mit hoher Leistung auszubilden. Insbesondere ergeben sich mit Anwendung der Erfindung folgende technische Merkmale:

1. Die elektrische Spannung am Sternpunkt 60 kann durch Beeinflussung des Tastverhältnisses zwischen positiven Nullzeigern, bei denen alle oberen IGBT's 40, 44, 48 eingeschaltet sind, und negativen Nullzeigern, bei denen alle unteren IGBT's 42, 46, 50 eingeschaltet sind, beeinflusst werden. Wird der Bezugspunkt auf die negative Zwischenkreisspannung des ersten Kondensators 32 gelegt, und zwar das Bezugspotential 86, kann die Ausgangsspannung 80 zwischen Null und der ersten elektrischen Gleichspannung am ersten Kondensator 32 eingestellt werden. Wird der Bezugspunkt hingegen wie bei den FIGN 7 und 8 auf den Zwischenkreismittelpunkt gelegt, das heißt, der halben Spannung am ersten Kondensator 32, können auch negative Spannungsniveaus als Ausgangsspannung 80 erreicht werden (vergleiche FIG 8). Jedoch reduziert sich die maximal einstellbare Ausgangsspannung 80 hierbei auf den halben Wert der ersten elektrischen Spannung am ersten Kondensator 32.

2. Alle anderen Kombinationen von ein- und ausgeschalteten IGBT's 40, 42, 44, 46, 48, 50 werden als Aktivzeiger bezeichnet und können zum Liefern von elektrischen Spannungen am Sternpunkt 60 von einem Drittel und zwei Drittel des Wertes der ersten elektrischen Spannung am ersten Kondensator 32 dienen. Hierdurch können Oberschwingungen der zweiten elektrischen Gleichspannung reduziert werden. Zu beachten ist, dass die Aktivzeiger einen Strom verursachen, der zwar durch die Induktivitäten 62, 66, 68 und die IGBT's 40, 42, 44, 46, 48, 50 fließt und dort Verluste erzeugt, aber keinen Beitrag zu einem Gleichstrom am Ausgang des Filtermoduls 84 liefert. Vorteilhaft ist jedoch, dass sich der Oberschwingungsgehalt der Ausgangsspannung 80 durch sinnvolle Wahl der Aktiv- und Nullzeiger reduzieren lässt und damit ein Filteraufwand beim Filtermodul 84 reduziert werden kann. So kann beispielsweise eine Ausgangsspannung von 0,1 der ersten Gleichspannung oberschwingungsoptimal mit der ausschließlichen Verwendung der Sternpunktspannungen Null und ein Drittel erzeugt werden.

3. Ferner kann eine Erweiterung von bekannten Schaltzuständen bei der konventionellen Pulsweitenmodulation (PWM) für den normalen Wechselrichterbetrieb erreicht werden. Gegenüber der üblichen PWM werden beispielsweise drei ergänzende Schaltzustände vorgesehen, die der Sternpunktspannung 0,5 mal der ersten elektrischen Spannung am ersten Kondensator 32 entsprechen. Dazu wird jeweils eine der Halbbrücken 130, 132, 134 deaktiviert, so dass ihre beiden IGBT's ausgeschaltet sind. In den beiden anderen Phasen sind dagegen die gegenüberliegenden Schalter aktiv, wie zum Beispiel anhand von FIG 10 erläutert. Dadurch kann neben den Ausgangsspannungen 80 von einem Drittel und zwei Drittel der ersten elektrischen Spannung auch das zusätzliche Spannungsniveau von 0,5 der ersten elektrischen Spannung geschaltet werden. Zu beachten ist, dass dieses Spannungsniveau erst dann anliegt, wenn der Strom in der jeweils abgeschalteten Phase beziehungsweise dem entsprechenden Halbbrückenmodul im Wesentlichen auf Null abgesunken ist. Hierdurch kann der Oberschwingungsgehalt der Ausgangsspannung 80 weiter reduziert werden.

4. Durch eine symmetrische Ansteuerung der Halbbrückenmodule 130, 132, 134 kann eine thermische Belastung reduziert werden. Durch die Ansteuerungsmerkmale, wie zuvor unter Nummer 2 und Nummer 3 genannt, bildet sich eine Asymmetrie in der Ansteuerung der IGBT's 40, 42, 44, 46, 48, 50 aus, und zwar in Bezug auf die Länge der entsprechenden Einschaltzeiten. Das bedeutet, dass bei einer Ansteuerung gemäß FIG 9 der Leistungsschalter, der mit dem Signal A geschaltet wird, stärker belastet wird als die entsprechenden IGBT's, die mit den Steuersignalen B und C gesteuert werden. Entsprechend ergibt sich eine Asymmetrie bei einer Steuerung gemäß FIG 10 dahingehend, dass der IGBT, der mit dem Steuersignal B gesteuert wird, weniger belastet wird, als die mit den beiden anderen Steuersignalen A und C gesteuerten IGBT's. Da die Asymmetrie eine reduzierte Nutzleistung des DC/DC-Wandlers insgesamt zur Folge hat, kann eine einfache Lösung mit einer Symmetrierung gemäß der FIG 11 und 12 erreicht werden. Hierbei wird, beispielsweise durch einen kontinuierlichen Tausch der Steuersignale A, B und C dafür gesorgt, dass die IGBT's 40, 42, 44, 46, 48, 50 im Mittel vorzugsweise immer gleich belastet werden. Zu diesem Zweck kann basierend auf der klassischen PWM für 3-phasige Wechselrichter entweder der Winkel fortlaufend verändert beziehungsweise weitergedreht werden, oder es werden - abweichend von der gewöhnlichen Wechselrichter-PWM - die Schaltmuster für alle drei Phasen gleich gewählt, jedoch um 120 Grad verschoben in der Phase.

Hergestellt beziehungsweise realisiert werden kann der auf einem Wechselrichter basierende DC/DC-Wandler wie folgt:
Obwohl bei normaler Raumzeigermodulation ein Modulationsgrad M=0 das Schalten aller Halbbrückenmodule 130, 132, 134 des Wechselrichters 30 zum gleichen Zeitpunkt erlaubt, ist bisher das Tastverhältnis beim konventionellen Wechselrichterbetrieb nicht gezielt einstellbar. Daher wird der standardmäßig existierende Steuersatz des Wechselrichters um eine entsprechende Steuergröße k ([0; 1]) erweitert, die es erlaubt, das Tastverhältnis zwischen den beiden Nullzeigern einzustellen.

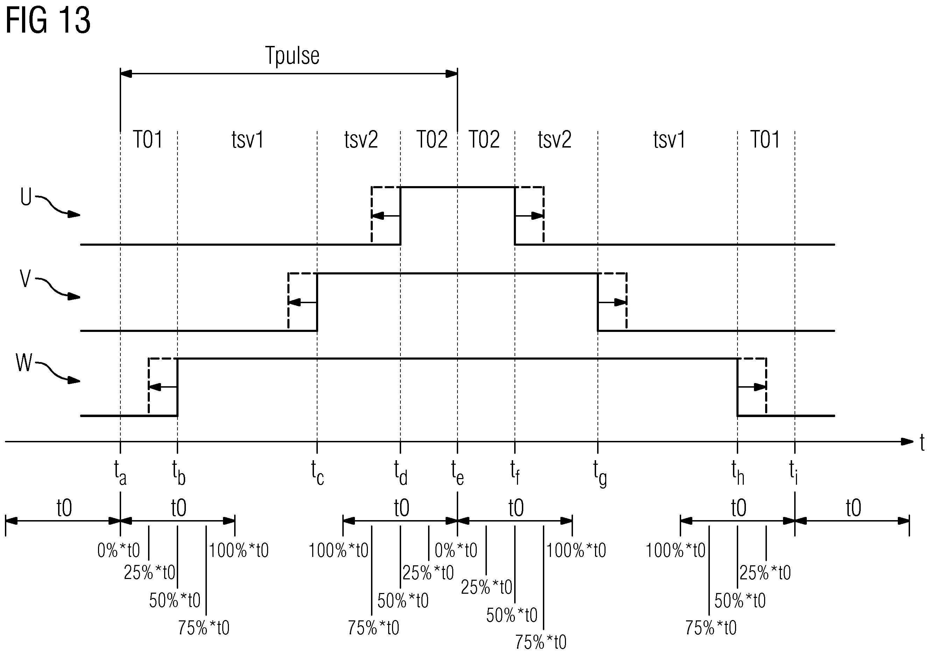

Dies ist anhand von FIG 13 beispielhaft dargestellt. Zu sehen ist das PWM-Intervall gekennzeichnet durch die Zeitpunkte $t_A$ und $t_E$, die ein Zeitintervall $t_{Pulse}$ bilden. Dieses Zeitintervall weist im Zeitraum $t_{01}$ gebildet durch die Zeitgrenzen $t_A$ und $t_B$ einen negativen Nullzeiger auf, auf dem im Zeitintervall $t_{SV1}$ gebildet durch die Zeitgrenzen $t_B$ und $t_C$ und daran anschließend das Zeitintervall $t_{SV2}$ gebildet durch die Zeitgrenzen $t_C$ und $t_D$ die verschiedenen Aktivzeiger aktiv sind und ein weiteres Zeitintervall $t_{02}$ umfassend die Zeitgrenzen $t_D$ und $t_E$ mit positivem Nullzeiger folgt. Durch Verlängern von $t_{02}$ und entsprechendes Verkürzen von $t_{01}$ wird der Anteil des positiven Nullzeigers verlängert. Die Sternpunktspannung als gewünschtes Ausgangssignal erhöht sich entsprechend. Die Skala am unteren Bildrand zeigt die Grenze des rechten beziehungsweise des linken Nullzeigers bei verschiedenen Einstellungen des k-Faktors. Die Einstellung k=0,5 beziehungsweise 50% entspricht der Standardeinstellung bei Raumzeigermodulation mit zwei gleich langen Nullzeigern in jedem Pulsintervall.

Diese Erweiterung erlaubt es, die oben beschriebenen Ansteuerungsmerkmale gemäß Nummern 1 und 2 gemäß der FIG 2 bis 8 im Rahmen der im Wechselrichter 30 bereits existierenden PWM zu verwenden.

Durch Aufstellung und Lösung eines Optimierungsproblems kann der optimale Modulationsgrad M, das Tastverhältnis k sowie die optimale Auslegung von Induktivitäten und Filtern ermittelt werden. Dies wird im Folgenden weiter erläutert.

Das temporäre Abschalten eines Halbbrückenmoduls im Rahmen der Halbbrückenmodulausschaltzeit ist nicht Bestandteil der bekannten Steuerung eines Wechselrichters. Dort ist lediglich vorgesehen, dass durch Vergleich eines Sollwertsignals mit einem schaltfrequenten Signal für jedes der Halbbrückenmodule entschieden wird, ob der obere oder der untere Halbleiterschalter aktiviert wird. Es wird jedoch keine Gesamtausschaltbedingung erzeugt. Für die Nutzung dieses neuen Schaltzustands, deaktiviertes Halbbrückenmodul, wird eine Vorabberechnung optimierter Schaltmuster vorgeschlagen, die in Tabellen gespeichert werden und während des bestimmungsgemäßen Betriebs als DC/DC-Wandler nur ausgelesen zu werden brauchen.

Der Wechselrichter in Form eines Motormoduls besitzt vorzugsweise eine technische Einrichtung, unabhängig von der Standard PWM über Raumzeigermodulation, die die Halbleiterschalter direkt über vorausberechnete optimierte Pulsmuster ansprechen kann. Diese Einrichtung kann dazu benutzt werden, um einen optimierten, schwingungsarmen Betrieb von Wechselspannungsmotoren am Wechselrichter im Wechselrichterbetrieb zu realisieren.

Durch die Verwendung optimierter Pulsmuster können die in den oben beschriebenen Nummern 1 bis 4 angegebenen Merkmale genutzt werden, um die einleitend beschriebenen Ziele erreichen zu können. Das heißt, durch Vorgabe eines bestimmten Oberschwingungsgehalts und beispielsweise einer Kostenfunktion für das Filtermodul, insbesondere Induktivitäten, Filter und dergleichen sowie einer maximalen Verlustleistung lässt sich ein komplexes Optimierungsproblem formulieren, dessen Lösung einen Satz optimierter Pulsmuster sowie die optimale Wahl von Induktivitäten, Filtern und dergleichen zum Ergebnis hat. Die so für jede Ausgangsspannung 80 vorausberechneten Pulsmuster werden dann im bestimmungsgemäßen Betrieb als DC/DC-Wandler zur Pulsung beziehungsweise Taktung der Leistungshalbleiter verwendet.

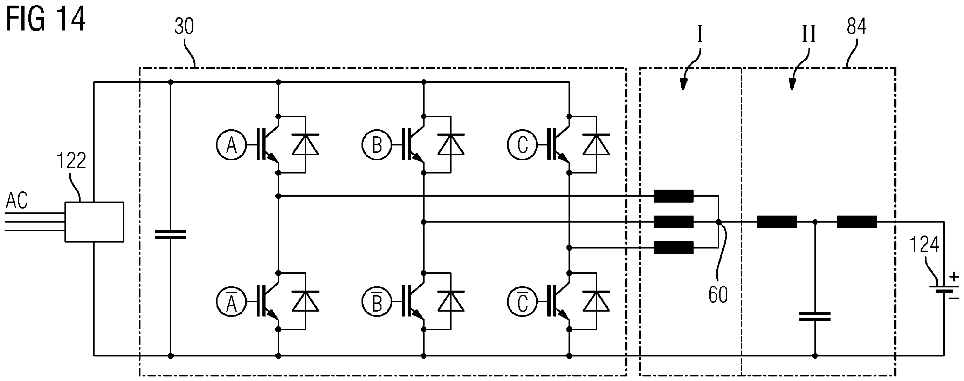

Für die Berechnung eines optimalen Pulsmusters kann dem Grunde nach wie folgt vorgegangen werden (FIG 14):

In einem ersten, in FIG 14 mit I bezeichneten Schritt schlägt ein mittels einer Rechnereinrichtung ausgeführter Suchalgorithmus ein neu zu bewertendes Pulsmuster und auch drei zum Stern geschaltete Induktivitäten für das Filtermodul vor. Die Rechnereinrichtung ist nicht Bestandteil des Wechselrichters oder des Filtermoduls. Sie ist vielmehr Bestandteil einer Herstellvorrichtung für den einen Wechselrichter in erfindungsgemäßer Weise benutzenden DC/DC-Wandler. Dazu können zum Beispiel genetische Suchalgorithmen, wie sie bereits bei der Berechnung von optimierten Pulsmustern für 3-phasige Wechselrichter eingesetzt werden, verwendet werden. Nachfolgend wird das vorgeschlagene Pulsmuster sowie die vorgeschlagenen Induktivitäten mittels der Rechnereinrichtung simuliert und ein Frequenzspektrum der Sternspannung $U^2_{dr}$ (f) berechnet.

Mithilfe einer vorgegebenen Kostenfunktion und vorgegebenen Nebenbedingungen basierend auf den zuvor genannten Zielen wird sodann die Eignung des vorgeschlagenen Schaltmusters sowie der vorgeschlagenen Induktivitäten bewertet. Eine Bewertung kann beispielsweise mithilfe einer Minimumsuche einer Kostenfunktion erfolgen, wie

$$ F = k_1 M^2 + k_2 \sqrt{\sum_n q_n U^2_{dr} (nf_0)} $$

Der erste Summand der Kostenfunktion F, der den Modulationsgrad M enthält, bewertet die Verluste im Wechselrichter durch Ströme während der Aktivzeiger. Der zweite Summand von F bewertet den Kostenaufwand zur Dämpfung von Oberschwingungen der Ausgangsspannung. Zum Beispiel wird hierzu das Frequenzspektrum bei einem mehrfachen der Grundfrequenz des vorgegebenen Pulsmusters betrachtet und mit einem frequenzabhängigen Faktor $q_n$ gewichtet. Der Suchalgorithmus verwendet das Ergebnis der Bewertung, um ein neues Pulsmuster oder einen Parametersatz für die Filterung vorzuschlagen, oder er erklärt die Suche für beendet. Das Ergebnis des Suchalgorithmus ist daher ein optimiertes Pulsmuster sowie eine Auslegung der Induktivitäten zwischen den Mittelanschlüssen und dem Sternpunkt.

In einem zweiten Schritt, der in FIG 14 mit II gekennzeichnet ist, werden dann für unterschiedliche DC-Filter-Topologien mittels einer einfachen, direkten Berechnung, beispielsweise mittels Transferfunktionen, die entsprechenden Komponentenwerte ermittelt, die sicherstellen, dass die Spannung $U_{DR}$ hinreichend gefiltert wird. Das heißt, dass die gewünschte Obergrenze für den Oberschwingungsgehalt der Ausgangsspannung eingehalten wird. Daraus ergibt sich, dass die Nebenbedingung

$$ \sqrt{\sum_n q_n U^2_{out} (nf_0)} < k_3 $$

erfüllt wird.

Das Ergebnis der Optimierung ist daher sowohl ein optimiertes Pulsmuster als auch eine konkrete Topologie und Auslegung des Filtermoduls, mit denen die Kostenfunktion und die Nebenbedingungen erfüllt werden können.

Als Kern der Erfindung ergibt sich somit, dass einerseits neuartige Ansteuermerkmale definiert werden, um insbesondere einen 3-phasigen Wechselrichter aber auch andere Wechselrichter, wie eingangs angegeben, als DC/DC-Wandler betreiben zu können, und andererseits diese zu verwenden, um vorab definierte Ziele optimal zu erreichen.

Ein Vorteil der Erfindung ergibt sich durch die Möglichkeit, auf Basis der Zielvorgaben für Oberwellengehalt und Verlustleistungen, insbesondere thermische Verluste, eine Ansteuerung der Halbleiterschalter zu erreichen, die zu einem minimalen Filteraufwand, beispielsweise in Bezug auf Kosten, Baugröße, oder dergleichen, sowie minimaler Verlustleistung führt und dabei das Leistungspotential des Wechselrichters bestmöglich ausschöpft.

Ein Ausführungsbeispiel ergibt sich unter weiterer Berücksichtigung von FIG 14. Hierbei soll ein Akkumulator 124 mit einer Kapazität von 50 kWh mittels einem Sinamics™ ALM AC-DC-Konverter der Firma Siemens AG und mittels einem als DC/DC-Wandler betriebenes Motormodul an ein dreiphasiges Wechselspannungsnetz angebunden werden. Derartige Anwendungen lassen sich insbesondere im Bereich Smart-Grid einsetzen, bei dem Akkumulatoren zum Ausgleichen von Lastspitzen, beispielsweise hervorgerufen durch regenerative Energieerzeugung, verwendet werden. Erfindungsgemäß werden als erstes die Ziele der Auslegung definiert. Die Kostenfunktion in diesem Beispiel soll wie oben beschrieben formuliert sein. Zusätzlich sollen noch folgende Randbedingungen beziehungsweise Nebenbedingungen berücksichtigt werden.

- Die Grenze für die maximal zulässige Spannungs- und Stromwelligkeit für den Betrieb des Akkumulators 124 soll zwei Prozent nicht überschreiten.

- Es soll ein Motormodul (Wechselrichter) mit einer Leistung von 80 kW verwendet werden, da, um einen geringen Oberschwingungsgehalt in der Ausgangsspannung erreichen zu können, auch Aktivzeiger genutzt werden und dadurch ein Derating berücksichtigt werden muss, zum Beispiel in der Größenordnung von etwa 15 Prozent. Die Auswahl des Leistungsteils definiert die maximale Strom- und Spannungsfestigkeit sowie die ökonomisch sinnvolle Schaltfrequenz.

Induktivitäten und Kondensatoren können aus einem vorgegebenen Pool von Komponenten ausgewählt werden, zum Beispiel von Siemens AG oder Epcos. Deren Spannungs- und Stromfestigkeit, Volumen, Preis sowie thermische Eigenschaften sind bekannt und werden für die Optimierungsaufgabe abrufbar gespeichert.

- Die Filtertopologie des Filtermoduls wird aus einer vorgegebenen Datenbank typischer Filtertopologien ausgewählt, die ebenfalls auslesbar gespeichert verfügbar ist.

- Schließlich wird eine Volumenobergrenze für die gesamte Einrichtung vorgegeben.

Mittels spezieller mathematischer Optimierungsmethoden, wie evolutionärer Algorithmen, wird nun das optimale Pulsmuster, wie beispielsweise oben beschrieben, sowie die optimale Auslegung der Topologie des Filtermoduls unter Minimierung der Kostenfunktion und unter Beachtung der Nebenbedingungen berechnet.
Die so berechneten Elemente des Filtermoduls werden zu einem dezidierten Filtermodul, zum Beispiel dem Filtermodul 84, zusammengestellt.
Darüber hinaus kann vorgesehen sein, dass das Filtermodul selbst eine Information für den Wechselrichter bereitstellt, der es erlaubt, bei Anschließen an den Wechselrichter diesen über die Eigenschaften des Filtermoduls zu informieren, so dass der Wechselrichter automatisch ein geeignetes, vorausberechnetes Pulsmuster zur Nutzung durch den Taktgeber auswählen kann. Die Bereitstellung kann beispielsweise über eine Schnittstelle erfolgen. Insbesondere kann die Konfiguration des zu verwendenden Pulsmustersatzes auch über eine Standardparameterschnittstelle des Wechselrichters, über eine LAN-Schnittstelle, eine WLAN-Schnittstelle, eine USB-Schnittstelle oder dergleichen erfolgen.
Die vorangehende Beschreibung der Ausführungsbeispiele soll lediglich die Erfindung erläutern und diese nicht beschränken. Selbstverständlich wird der Fachmann bei Bedarf entsprechende Variationen vorsehen, ohne den Kerngedanken der Erfindung zu verlassen. Insbesondere können natürlich anstelle der IGBT's auch beliebige andere Halbleiterschalter zum Einsatz kommen, beispielsweise auch Halbleiterschalter, die einen bidirektionalen Stromfluss im eingeschalteten Zustand erlauben und demnach ein Vorsehen von Freilaufdioden nicht zwingend erfordern. Solche Halbleiterschalter können beispielsweise durch spezielle MOSFET's gebildet sein. Darüber hinaus kann natürlich die Erfindung sowohl zum Tiefsetzstellen als auch zum Hochsetzstellen benutzt werden. Es kehrt sich lediglich die Energieflussrichtung um und der Taktgeber ist mit entsprechenden Steuersignalen zu versorgen. Anstelle der IGBT's 40, 44, 48, die zum Beispiel beim Tiefsetzbetrieb aktiv sein können, können dann statt dessen die Halbleiterschalter 42, 46, 50 im Taktbetrieb aktiv sein, wohingegen die Halbleiterschalter 40, 44, 48 während dieses Betriebs des Hochsetzstellens deaktiviert sein können, das heißt, ausgeschaltet sein können.

## Patentansprüche

1. Wechselrichter (30) mit einem ersten Kondensator (32) mit einer ersten Gleichspannung (82), wenigstens zwei jeweils zwei in Serie geschaltete Halbleiterschalter (40,42,44,46, 48,50) und jeweils einen Mittelanschluss (34,36,38) aufweisenden Halbbrückenmodulen (130,132,134) sowie einem Taktgeber zum Bereitstellen von Steuersignalen (A,B,C) zum Betreiben der Halbleiterschalter (40,42,44,46,48, 50) der Halbbrückenmodule (130,132,134) in einem Schaltbetrieb, wobei die Halbbrückenmodule (130, 132,134) am ersten Kondensator (32) angeschlossen und dadurch parallel geschaltet sind, wobei an den Mittelanschlüssen (34,36,38) der Halbbrückenmodule (130,132, 134) ein Filtermodul (84) zum Bereitstellen einer zweiten Gleichspannung (80) angeschlossen ist und der Taktgeber dazu eingerichtet ist, die Steuersignale (A,B,C) derart zu erzeugen, dass die erste elektrische Gleichspannung (82) am ersten Kondensator (32) in die zweite elektrische Gleichspannung (80) gewandelt wird, **dadurch gekennzeichn et**, dass das Filtermodul (84) eine Sternpunktinduktivität (76) aufweist, die am Sternpunkt (60) angeschlossen ist.

2. Wechselrichter nach Anspruch 1, **dadurch gekennzeichnet, dass** das Filtermodul (84) für jeden der Mittelanschlüsse (34, 36,38) jeweils eine im wesentlichen magnetisch autarke Induktivität (62,66,68) bereitstellt, die mit einem ihrer Anschlüsse an den jeweiligen Mittelanschluss (34,36,38) angeschlossen ist.

3. Wechselrichter nach Anspruch 2, **dadurch gekennzeichnet, dass** die Induktivitäten (62,66,68) mit den jeweils anderen Anschlüssen den gemeinsamen Sternpunkt (60) bildend elektrisch leitend zusammengeschaltet sind.

4. Wechselrichter nach einem der Ansprüche 1 bis 3, **dadurch gekennzeichnet, dass** der Sternpunkt (60) an einem zweiten Kondensator (74) zum Bereitstellen der zweiten elektrischen Gleichspannung (80) angeschlossen ist.

5. Wechselrichter nach einem der Ansprüche 1 bis 4, **dadurch gekennzeichnet, dass** das Filtermodul (84) einen Anschluss zum Bereitstellen der zweiten Gleichspannung mit einer elektrischen Drossel (78) aufweist.

6. Wechselrichter nach einem der Ansprüche 1 bis 5, **dadurch gekennzeichnet, dass** der Wechselrichter (30) ein Bezugspotential (86) bereitstellt.

7. Verfahren zum Betreiben eines Wechselrichters (30), wobei wenigstens zwei jeweils zwei in Serie geschaltete Halbleiterschalter (40,42,44,46,48,50) und jeweils einen Mittelanschluss (34,36,38) aufweisende Halbbrückenmodule (130,132, 134) des Wechselrichters (30) mittels eines Taktgebers im Schaltbetrieb betrieben werden, wobei die Halbbrückenmodule (130,132,134) in Parallelschaltung an einem ersten Kondensator (32) des Wechselrichters (30) betrieben werden, wobei am ersten Kondensator (32) eine erste Gleichspannung (82) anliegt, wobei der Taktgeber Steuersignale (A,B,C) derart erzeugt, dass mittels eines an die Mittelanschlüsse (34,36,38) der Halbbrückenmodule (130,132,134) angeschlossenen Filtermoduls (84) eine zweite Gleichspannung (80) bereitgestellt wird, sodass die erste elektrische Gleichspannung (82) am ersten Kondensator (32) in die zweite elektrische Gleichspannung (80) gewandelt wird, **dadurch gekennzeichnet**, dass das Wandeln mittels einer Sternpunktinduktivität (76) des Filtermoduls (84) erfolgt, die am Sternpunkt (60) angeschlossen ist.

8. Verfahren nach Anspruch 7, **dadurch gekennzeichnet, dass** die Halbbrückenmodule (130,132, 134) zeitgleich betrieben werden.

9. Verfahren nach Anspruch 7 oder 8, **dadurch gekennzeichnet, dass** ausschließlich nur die Halbleiterschalter (40,44,48) der Halbbrückenmodule (130, 132, 134), die mit einem positiven elektrischen Potential des ersten Kondensators (32) verbunden sind, im Schaltbetrieb betrieben werden und die jeweils anderen Halbleiterschalter (42,46,50) der Halbbrückenmodule (130,132,134) während dieses Betriebs ausgeschaltet bleiben.

10. Verfahren nach Anspruch 7 oder 8, **dadurch gekennzeichnet, dass** die Halbleiterschalter (40, 42, 44,46,48,50) jedes Halbbrückenmoduls (130,132, 134) wechselweise geschaltet werden.

11. Verfahren nach Anspruch 10, **dadurch gekennzeichnet, dass** die Halbleiterschalter (40,42,44, 46, 48,50) wenigstens eines Halbbrückenmoduls (130, 132, 134) für eine vorgebbare Zeitdauer zugleich ausgeschaltet sind.

12. Verfahren nach einem der Ansprüche 7 bis 11, **dadurch gekennzeichnet, dass** die Halbleiterschalter (40,42,44,46,48,50) der Halbbrückenmodule (130, 132,134) zeitlich phasenversetzt gesteuert werden.

13. Verfahren nach einem der Ansprüche 7 bis 12, **dadurch gekennzeichnet, dass** der Taktgeber die Steuersignale (A,B,C) gemäß einem aus einer Tabelle vorabberechneter Pulsmuster ausgelesenen Pulsmuster erzeugt.

14. Verfahren zur Herstellung eines getakteten elektronischen Energiewandlers zum Wandeln einer ersten elektrischen Gleichspannung (82) in eine zweite elektrische Gleichspannung (80), **dadurch gekennzeichnet, dass** ein Wechselrichter (30) mit wenigstens zwei jeweils zwei in Serie geschaltete Halbleiterschalter (40,42,44,46,48,50) und jeweils einen Mittelanschluss (34,36,38) aufweisenden Halbbrückenmodulen (130,132,134) sowie einem Taktgeber zum Bereitstellen von Steuersignalen (A,B,C) zum Betreiben der Halbleiterschalter (40,42,44,46,48, 50) der Halbbrückenmodule (130, 132, 134) in einem Schaltbetrieb verwendet wird, wobei die Halbbrückenmodule (130,132,134) in Parallelschaltung betrieben und die Steuersignale (A,B,C) vom Taktgeber gemäß eines vorgegebenen Pulsmusters erzeugt werden, wobei ein an die Mittelanschlüsse (34, 36,38) anzuschließendes Filtermodul (84), welches eine Sternpunktinduktivität (76) aufweist, die am Sternpunkt (60) angeschlossen ist, und eine Tabelle mit vorabberechneten Pulsmustern ermittelt wird.

15. Verfahren nach Anspruch 14, **dadurch gekennzeichnet, dass** das Filtermodul (84) für jeden der Mittelanschlüsse (34,36,38) jeweils eine im wesentlichen magnetisch autarke, mit einem ihrer Anschlüsse an den jeweiligen Mittelanschluss (34,36, 38) angeschlossene Induktivität (62, 66,68) bereitstellt, welche Induktivitäten (62,66,68) mit den jeweils anderen Anschlüssen den gemeinsamen Sternpunkt (60) bilden, wobei gemäß einem Suchalgorithmus ein Pulsmuster ermittelt wird, mittels einer Rechnereinrichtung eine Simulation eines bestimmungsgemäßen Betriebs durchgeführt und ein Frequenzspektrum einer elektrischen Spannung am Sternpunkt (60) ermittelt wird.

**16.** Verfahren nach Anspruch 15, **dadurch gekennzeichnet, dass** mittels der Rechnereinrichtung unter Berücksichtigung wenigstens einer Nebenbedingung ein optimales Pulsmuster ermittelt wird.

**17.** Verfahren nach Anspruch 16, **dadurch gekennzeichnet, dass** eine Topologie für das Filtermodul (84) ermittelt wird, mit der ein vorgegebener Wert für Oberschwingungen einer zweiten Gleichspannung (80) eingehalten wird.

**18.** Rechnerprogrammprodukt umfassend ein Programm für eine Rechnereinheit eines Taktgebers eines Wechselrichters (30), wobei das Programm Programmkodeabschnitte eines Programms zum Ausführen der Schritte eines Verfahrens nach einem der Ansprüche 7 bis 13 aufweist, wenn das Programm durch die Rechnereinheit ausgeführt wird, sodass der Wechselrichter (30) eine erste elektrische Gleichspannung (82) in eine zweite elektrische Gleichspannung (80) wandelt.

**19.** Rechnerprogrammprodukt umfassend ein Programm geeignet für eine Herstellung eines getakteten elektronischen Energiewandlers zum Wandeln einer ersten elektrischen Gleichspannung (82) in eine zweite elektrische Gleichspannung (80), welcher getaktete elektronische Energiewandler einen Wechselrichter (30) mit wenigstens zwei jeweils zwei in Serie geschaltete Halbleiterschalter (40,42, 44,46,48,50) und jeweils einen Mittelanschluss (34, 36,38) aufweisenden Halbbrückenmodulen (130, 132,134) sowie einem Taktgeber zum Bereitstellen von Steuersignalen (A,B,C) zum Betreiben der Halbleiterschalter (40, 42,44,46,48,50) der Halbbrückenmodule (130,132,134) in einem Schaltbetrieb verwendet, wobei die Halbbrückenmodule (130, 132, 134) in Parallelschaltung betrieben und die Steuersignale (A,B,C) vom Taktgeber gemäß eines vorgegebenen Pulsmusters erzeugt werden, wobei das Programm Programmkodeabschnitte eines Programms zum Ausführen der Schritte eines Verfahrens nach einem der Ansprüche 14 bis 17 aufweist, wenn das Programm durch eine Rechnereinrichtung ausgeführt wird, sodass der Wechselrichter (30) mittels eines Filtermoduls (84) die erste elektrische Gleichspannung (82) in die zweite elektrische Gleichspannung (80) wandelt.

**Claims**

**1.** Inverter (30) having a first capacitor (32) with a first direct voltage (82), at least two half-bridge modules (130,132,134) each having two semiconductor switches (40,42,44,46,48,50) connected in series and each having a centre terminal (34,36,38), and a clock generator for providing control signals (A,B,C) for operating the semiconductor switches (40,42,44, 46,48,50) of the half-bridge modules (130,132,134) in a switching operation, wherein the half-bridge modules (130,132,134) are connected to the first capacitor (32) and as a result are connected in parallel, wherein a filter module (84) for providing a second direct voltage (80) is connected to the centre terminals (34,36,38) of the half-bridge modules (130,132, 134) and the clock generator is designed to generate the control signals (A,B,C) such that the first electrical direct voltage (82) at the first capacitor (32) is converted into the second electrical direct voltage (80), **characterised in that** the filter module (84) has a star point inductor (6) that is connected to the star point (60).

**2.** Inverter according to claim 1, **characterised in that** the filter module (84) in each case provides an essentially magnetically autonomous inductor (62,66, 68) for each of the centre terminals (34, 36,38), which is connected by one of its terminals to the respective centre terminal (34,36,38).

**3.** Inverter according to claim 2, **characterised in that** the inductors (62,66,68) are electrically conductively interconnected to the respective other terminals forming the common star point (60).

**4.** Inverter according to one of claims 1 to 3, **characterised in that** the star point (60) is connected to a second capacitor (74) for providing the second electrical direct voltage (80).

**5.** Inverter according to one of claims 1 to 4, **characterised in that** the filter module (84) has a terminal for providing the second direct voltage with an electrical choke (78).

**6.** Inverter according to one of claims 1 to 5, **characterised in that** the inverter (30) provides a reference potential (86).

**7.** Method for operating an inverter (30), wherein at least two half-bridge modules (130,132,134) of the inverter (30) each having two semiconductor switches (40,42,44,46,48,50) connected in series and each having a centre terminal (34,36,38) are operated in the switching operation by means of a clock generator, wherein the half-bridge modules (130,132,134) are connected in parallel to a first capacitor (32) of the inverter (30), wherein a first direct voltage (82) is applied to the first capacitor (32), wherein the clock generator generates control signals (A,B,C) such that a second direct voltage (80) is provided by means of a filter module (84) connected to the centre terminals (34,36,38) of the half-bridge modules (130, 132,134), such that the first electrical direct voltage (82) at the first capacitor (32) is converted into the second electrical direct voltage (80), **characterised in that** the conversion takes place by means of a star point inductor (76) of the filter module (84) that is connected to the star point (60).

8. Method according to claim 7, **characterised in that** the half-bridge modules (130,132,134) are operated simultaneously.

9. Method according to claim 7 or 8, **characterised in that** exclusively only the semiconductor switches (40,44,48) of the half-bridge modules (130,132,134) that are connected to a positive electrical potential of the first capacitor (32) are operated in the switching operation and the respective other semiconductor switches (42,46,50) of the half-bridge modules (130,132,134) remain deactivated during said operation.

10. Method according to claim 7 or 8, **characterised in that** the semiconductor switches (40,42,44,46,48, 50) of each half-bridge module (130,132,134) are alternately switched.

11. Method according to claim 10, **characterised in that** the semiconductor switches (40,42,44,46,48,50) of at least one half-bridge module (130,132,134) are deactivated simultaneously for a predefinable period.

12. Method according to one of claims 7 to 11, **characterised in that** the semiconductor switches (40,42, 44,46,48,50) of the half-bridge modules (130,132, 134) are controlled phase-shifted over time.

13. Method according to one of claims 7 to 12, **characterised in that** the clock generator generates the control signals (A,B,C) according to a pulse pattern read out from a table of precalculated pulse patterns.

14. Method for producing a clocked electronic energy converter for converting a first electrical direct voltage (82) into a second electrical direct voltage (80), **characterised in that** an inverter (30) with at least two half-bridge modules (130,132,134) having in each case two semiconductor switches (40,42,44, 46,48,50) connected in series and in each case a centre terminal (34,36,38), and a clock generator for providing control signals (A,B,C) for operating the semiconductor switches (40,42,44,46,48,50) of the half-bridge modules (130,132,134) is used in a switching operation, wherein the half-bridge modules (130,132,134) are operated in parallel connection and the control signals (A,B,C) are generated by the clock generator according to a predefined pulse pattern, wherein a filter module (84) to be connected to the centre terminals (34,36,38) is determined which has a star point inductor (76) that is connected to the star point (60), and a table containing precalculated pulse patterns.

15. Method according to claim 14, **characterised in that** the filter module (84) for each of the centre terminals (34,36,38) in each case provides an essentially magnetically autonomous inductor (62,66,68) connected by one of its terminals to the respective centre terminal (34,36,38), which inductors (62,66,68) form the common star point (60) with the respective other terminals, wherein according to a search algorithm a pulse pattern is determined, a simulation of a normal operation is performed by means of a computer device and a frequency spectrum of an electrical voltage is determined at the star point (60).

16. Method according to claim 15, **characterised in that** an optimum pulse pattern is determined by means of the computer device, taking into account at least one secondary condition.

17. Method according to claim 16, **characterised in that** a topology for the filter module (84) is determined, with which a predefined value for harmonics of a second direct voltage (80) is adhered to.

18. Computer program product comprising a program for a computer unit of a clock generator of an inverter (30), wherein the program comprises program code segments of a program for carrying out the steps of a method according to one of claims 7 to 13 when the program is carried out by the computer unit, such that the inverter (30) converts a first electrical direct voltage (82) into a second electrical direct voltage (80).

19. Computer program product comprising a program suitable for producing a clocked electronic energy converter for converting a first electrical direct voltage (82) into a second electrical direct voltage (80), which clocked electronic energy converter uses an inverter (30) with at least two half-bridge modules (130,132,134) having in each case two semiconductor switches (40,42,44,46,48,50) connected in series and in each case a centre terminal (34,36,38), and a clock generator for providing control signals (A,B, C) for operating the semiconductor switches (40,42, 44,46,48,50) of the half-bridge modules (130,132, 134) in a switching operation, wherein the half-bridge modules (130, 132,134) operate in parallel connection and the control signals (A,B,C) are generated by the clock generator according to a predefined pulse pattern, wherein the program comprises program code segments of a program for carrying out the steps of a method according to one of claims 14 to 17 when the program is carried out by a computer device, such that the inverter (30) converts the first electrical direct voltage (82) into the second electrical direct voltage (80) by means of a filter module (84).

**Revendications**

1.  Onduleur (30) comprenant un premier condensateur (32) ayant une première tension (82) continue, au moins deux interrupteurs (40, 42, 44, 46, 48, 50) à semi-conducteur montés en série et des modules (130, 132, 134) en demi-pont ayant chacun une borne (34, 36, 38) médiane, ainsi qu'une horloge de mise à disposition de signaux (A, B, C) de commande pour faire fonctionner les interrupteurs (40, 42, 44, 46, 48, 50) à semi-conducteur des modules (130, 132, 134) en demi-pont suivant un fonctionnement à coupure fréquente, les modules (130, 132, 134) en demi-pont étant reliés au premier condensateur (32) et ainsi montés en parallèle, dans lequel, aux bornes (34, 36, 38) médianes des modules (130, 132, 134) en demi-pont, est raccordé un module (84) de filtre pour mettre à disposition une deuxième tension (80) continue et l'horloge est conçue pour produire les signaux (A, B, C) de commande, de manière à ce que la première tension (82) électrique continue aux bornes du premier condensateur (82) soit transformée en la deuxième tension (80) électrique continue, **caractérisé en ce que** le module (84) de filtre a une inductance de point neutre, qui est reliée au point (60) neutre.

2.  Onduleur suivant la revendication 1, **caractérisé en ce que** le module (84) de filtre met à disposition, pour chacune des bornes (34, 36, 38) médianes, respectivement une inductance (62, 66, 68) sensiblement indépendante magnétiquement, qui est relié par l'une de ses bornes à la borne (34, 36, 38) médiane respective.

3.  Onduleur suivant la revendication 2, **caractérisé en ce que** les inductances (62, 66, 68) sont montées ensemble avec les autres bornes d'une manière conductrice de l'électricité en formant le point (60) neutre commun.

4.  Onduleur suivant l'une des revendications 1 à 3, **caractérisé en ce que** le point (60) neutre est relié à un deuxième condensateur (74) pour mettre à disposition la deuxième tension (80) électrique continue.

5.  Onduleur suivant l'une des revendications 1 à 4, **caractérisé en ce que** le module (84) de filtre a une borne de mise à disposition de la deuxième tension continue par une bobine (78) électrique.

6.  Onduleur suivant l'une des revendications 1 à 5, **caractérisé en ce que** l'onduleur (30) met à disposition un potentiel (86) de référence.

7.  Procédé pour faire fonctionner un onduleur (30), dans lequel on fait fonctionner au moins deux modules (130, 132, 134) en demi-pont de l'onduleur (30), ayant chacun deux interrupteurs (40, 42, 44, 46, 48, 50) à semi-conducteur montés en série et chacun une borne (34, 36, 38) médiane, au moyen d'une horloge en fonctionnement à coupure fréquente, dans lequel on fait fonctionner les modules (130, 132, 134) en demi-pont suivant un circuit en parallèle avec un premier condensateur (32) de l'onduleur (30), dans lequel il est appliqué, au premier condensateur (32), une première tension (82) continue, dans lequel l'horloge produit des signaux (A, B, C) de commande, de manière à mettre à disposition, au moyen d'un module (84) de filtre relié aux bornes (34, 36, 38) médianes des modules (130, 132, 134) en demi-pont, une deuxième tension (80) continue, de sorte que la première tension (82) électrique continue aux bornes du premier condensateur (32) soit transformée en la deuxième tension (80) électrique continu, **caractérisé en ce que** la transformation s'effectue au moyen d'une inductance (67) de point neutre du module (84) de filtre, qui est reliée au point (60) neutre.

8.  Procédé suivant la revendication 7, **caractérisé en ce que** l'on fait fonctionner les modules (130, 132, 134) en demi-pont en même temps.

9.  Procédé suivant la revendication 7 ou 8, **caractérisé en ce que** l'on fait fonctionner exclusivement seulement les interrupteurs (40, 44, 48) à semi-conducteur des modules (130, 132, 134) en demi-pont, qui sont reliés à un potentiel électrique positif du premier condensateur (32) en fonctionnement en coupure fréquente et les autres interrupteurs (42, 46, 50) à semi-conducteur des modules (130, 132, 134) en demi-pont restent ouverts pendant ce fonctionnement.

10. Procédé suivant la revendication 7 ou 8, **caractérisé en ce que** l'on monte en alternance les interrupteurs (40, 42, 44, 46, 48, 50) à semi-conducteur de chaque module (130, 132, 124) en demi-pont.

11. Procédé suivant la revendication 10, **caractérisé en ce que** les interrupteurs (40, 42, 44, 46, 48, 50) à semi-conducteur d'au moins un module (130, 132, 134) en demi-pont sont ouverts en même temps pendant une durée pouvant être donnée à l'avance.

12. Procédé suivant l'une des revendications 7 à 11, **caractérisé en ce que** l'on commande, en déphasage dans le temps, les interrupteurs (40, 42, 44, 46, 48, 50) à semi-conducteur des modules (130, 132, 134) en demi-pont.

13. Procédé suivant l'une des revendications 7 à 12, **ca-**

**ractérisé en ce que** l'horloge produit les signaux (A, B, C) de commande suivant un modèle d'impulsions lu dans une table de modèles d'impulsions calculés à l'avance.

14. Procédé de production d'un convertisseur électronique d'énergie cadencé pour transformer une première tension (82) électrique continue en une deuxième tension (80) électrique continue, **caractérisé en ce que** l'on utilise un onduleur (30) ayant au moins deux modules (130, 132, 134) en demi-pont comportant chacun deux interrupteurs (40, 42, 44, 46, 48, 50) à semi-conducteur montés en série et chacun une borne (34, 36, 38) médiane, ainsi qu' une horloge de mise à disposition de signaux (A, B, C) de commande pour faire fonctionner les interrupteurs (40, 42, 44, 46, 48, 50) à semi-conducteur des modules (130, 132, 134) en demi-pont suivant un fonctionnement à coupure fréquente, dans lequel on fait fonctionner les modules (130, 132, 134) en demi-pont suivant un circuit en parallèle et on produit les signaux (A, B, C) de commande par l'horloge suivant un modèle d'impulsions donné à l'avance, dans lequel on prévoit un module (84) de filtre à raccorder aux bornes (34, 36, 38) médiane et ayant une inductance (76) de point neutre, qui est reliée au point (60) neutre, et une table ayant des modèles d'impulsions calculés à l'avance.

15. Procédé suivant la revendication 14, **caractérisé en ce que** le module (84) de filtre met à disposition de chacune des bornes (34, 36, 38) médianes respectivement une inductance (62, 66, 68) reliée d'une manière sensiblement indépendante magnétiquement par l'une de ses bornes à la borne (34, 36, 38) médiane respective, laquelle inductance (62, 66, 68) forme, avec les autres bornes, le point (60) neutre commun, dans lequel, suivant un algorithme de recherche, on détermine un modèle d'impulsions au moyen d'un dispositif informatique, on effectue une simulation d'un fonctionnement conforme aux prescriptions et on détermine un spectre de fréquence d' une tension électrique au point (60) neutre.

16. Procédé suivant la revendication 15, **caractérisé en ce que**, au moyen du dispositif informatique, on détermine un modèle d'impulsions optimum en tenant compte d'au moins une condition secondaire.

17. Procédé suivant la revendication 16, **caractérisé en ce que** l'on détermine une topologie pour le module (84) de filtre, par laquelle on respecte une valeur donnée à l'avance des harmoniques d'une deuxième tension (80) continue.

18. Produit de programme d'ordinateur comprenant un programme pour une unité informatique d'une horloge d'un onduleur (30), le programme ayant des parties de code d'un programme de réalisation des stades d'un procédé suivant l'une des revendications 7 à 13, lorsque le programme est réalisé par l' unité informatique, de sorte que l'onduleur (30) transforme une première tension (82) électrique continue en une deuxième tension (80) électrique continue.

19. Produit de programme d'ordinateur comprenant un programme approprié à une production d'un convertisseur électronique d'énergie cadencé pour transformer une première tension (82) électrique continue en une deuxième tension (80) électrique continue, lequel convertisseur électronique d'énergie cadencé utilise un onduleur (30) ayant au moins deux modules (130, 132, 134) en demi-pont comportant chacun deux interrupteurs (40, 42, 44, 46, 48, 50) à semi-conducteur montés en série et chacun une borne (34, 36, 38) médiane, ainsi qu'une horloge de mise à disposition de signaux (A, B, C) de commande pour faire fonctionner les interrupteurs (40, 42, 44, 46, 48, 50) à semi-conducteur des modules (130, 132, 134) en demi-pont suivant un fonctionnement à coupure fréquente, dans lequel on fait fonctionner les modules (130, 132, 134) en demi-pont suivant un circuit en parallèle et on produit les signaux (A, B, C) de commande par l'horloge suivant un modèle d'impulsions donné à l'avance, le programme ayant des parties d'un programme pour réaliser les stades d'un procédé suivant l'une des revendications 14 à 17, lorsque le programme est réalisé par un dispositif informatique, de sorte que l'onduleur (30) transforme, au moyen d'un module (84) de filtre, la première tension (82) électrique continue en la deuxième tension (80) électrique continue.

## FIG 1

FIG 2

FIG 3

FIG 4

FIG 5

FIG 6

FIG 7

EP 2 863 528 B1

## FIG 8

(A)

(B)

(C)

80

## FIG 9

(A)

(B)

(C)

80

## FIG 10

110    112

(A)

(B)

(C)

80

FIG 11

FIG 12

# FIG 13

FIG 14

**IN DER BESCHREIBUNG AUFGEFÜHRTE DOKUMENTE**

**In der Beschreibung aufgeführte Patentdokumente**

- DE 102011075927 A1